(19) Europäisches Patentamt
European Patent Office
Office européen des brevets

(11) EP 4 081 574 B1

(12) **EUROPEAN PATENT SPECIFICATION**

(45) Date of publication and mention of the grant of the patent:
**31.01.2024 Bulletin 2024/05**

(21) Application number: **20851309.3**

(22) Date of filing: **23.12.2020**

(51) International Patent Classification (IPC):
***C08G 63/692*** *(2006.01)* ***C08G 63/91*** *(2006.01)*
***C09D 167/00*** *(2006.01)*

(52) Cooperative Patent Classification (CPC):
(C-Sets available)
**C08G 63/914; C08G 63/6924; C09D 167/00**

(Cont.)

(86) International application number:
**PCT/US2020/066770**

(87) International publication number:
**WO 2021/133873 (01.07.2021 Gazette 2021/26)**

(54) **A COATING COMPOSITION**

BESCHICHTUNGSZUSAMMENSETZUNG

COMPOSITION DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2019 US 201962953354 P**

(43) Date of publication of application:
**02.11.2022 Bulletin 2022/44**

(73) Proprietor: **PPG Industries Ohio Inc.**
**Cleveland, OH 44111 (US)**

(72) Inventors:
- **ZHANG, Wenchao**
  **Mason, OH 45040 (US)**
- **CUNNINGHAM, Sarah**
  **Batavia, OH 45103 (US)**
- **MOUSSA, Youssef**
  **Loveland, OH 45140 (US)**

(74) Representative: **Appleyard Lees IP LLP**
**15 Clare Road**
**Halifax HX1 2HY (GB)**

(56) References cited:
**WO-A1-2012/162301 WO-A2-2012/089657**
**US-A1- 2004 044 117**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 167/00, C08L 33/08, C08L 67/00**

## Description

### Field of the Invention

The present invention relates to a coating composition. In particular, the present invention relates to a coating composition comprising a first polyester material, a second polyester material different from the first polyester material and an acid functional acrylic material. In particular, the present invention relates to a coating composition comprising a first polyester material, a second polyester material and an acid functional acrylic material for coating onto a metal substrate, particularly a metal substrate used in the packaging industry, such as coating into food and/or beverage packaging and/or components used to fabricate such packaging. The invention also extends to food and/or beverage packaging coated on at least a portion thereof with a coating derived from such coating compositions. The invention also extends to the use of such coating compositions in the reduction or prevention of insufficient venting of a beverage can. The invention also extends to a method of coating a beverage can for carbonated drinks to reduce or prevent insufficient venting of the beverage can.

### Background of the Invention

Beverage cans are known in the art and typically comprise a can body and at least one can end. For example, the beverage can may be in the form of a two-piece can comprising a can body having an integrated bottom portion and a can end attached thereto or the beverage can may be in the form of a three-piece can comprising a can body, such as a substantially cylindrical can body, and top and bottom can ends attached thereto. Can ends may have a score line thereon defining a portion of the can end to be opened such that, upon opening, the can contents can be removed, for example, by pouring. The score line facilitates shearing around the periphery of the portion of the can end to be opened and, therefore, facilitates removal of the portion of the can end to be opened. WO2012/162301 A1 discloses a coating composition, useful for coating containers of all sorts such as food and beverage container, comprising a resinous binder and up to 10 percent by weight of a phosphatized polyester.

In the case of beverage cans containing carbonated beverages, such as, for example, beer or soda, sufficient carbonated gas should be allowed to escape from the beverage can substantially immediately upon opening of the beverage can in order to prevent the build up of said gas within the beverage can. Upon opening a carbonated beverage can, the mechanical seal of the portion of the can to be opened is broken, i.e. the metal along the score line is ruptured. However, the coating seal, i.e. the coating composition covering the score line, should also be simultaneously broken otherwise the coating composition may continue to cover the gap created upon breaking the mechanical seal (rupturing the score line) thereby preventing carbonated gas escaping from the beverage can. The release of carbonated gas from the beverage can upon opening thereof is known as 'venting'. If insufficient venting occurs, i.e. if an insufficient amount of carbonated gas is released substantially immediately upon opening of the beverage can because the coating seal is not broken, pressure can build up within the beverage can leading to, for example, the coating seal eventually rupturing under the pressure and the beverage can exploding.

Therefore, there is a desire to provide a coating composition for use in the opening of a beverage can that can reduce or prevent insufficient venting of the beverage by breaking cleanly, when the score line is ruptured.

It is an object of aspects of the present invention to provide a solution to one or more of the above mentioned problems.

### Summary of the Invention

According to the present invention there is provided a coating composition, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

wherein the coating composition comprises at least 5 wt% of the acid-functional acrylic material based on the total solid weight of the coating composition.

There is also provided a coating composition, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

wherein a coating formed from the coating composition has a wet film elongation of ≤20% with:

(i) a wet film Young's modulus of ≥3 GPa;
(ii) a wet film toughness of ≤1 MPa; and/or
(iii) a feathering of ≤5 mm.

There is also provided a food and/or beverage packaging coated on at least a portion thereof with a coating, the coating being derived from a coating composition, the coating compositions comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

wherein the coating composition comprises at least 5 wt% of the acid-functional acrylic material based on the total solid weight of the coating composition.

There is also provided a food and/or beverage packaging coated on at least a portion thereof with a coating, the coating being derived from a coating composition, the coating compositions comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

wherein the coating has a wet film elongation of ≤20% with:

(i) a wet film Young's modulus of ≥3 GPa;
(ii) a wet film toughness of ≤1 MPa; and/or
(iii) a feathering of ≤5 mm.

There is also provided the use of a coating composition for the reduction or prevention of insufficient venting of a beverage can, the beverage can comprising a can body and a can end having a score line on said can end, wherein the coating composition comprises:

(a) a first polyester material;
(b) a second polyester material different from the first polyester material, wherein the second polyester material

comprises the reaction product of a reaction mixture comprising:

(i) a polyacid;
(ii) a polyol; and
(iii) a phosphorous acid; and

(c) an acid-functional acrylic material,

wherein the coating composition comprises at least 5 wt% of the acid-functional acrylic material based on the total solid weight of the coating composition,
wherein the coating composition is applied to at least the internal surface of the can end over at least a portion of the score line;
and wherein the can, when filled with a carbonated beverage and sealed, exhibits sufficient venting upon rupture of the score line.

There is also provided the use of a coating composition for the reduction or prevention of insufficient venting of a beverage can, the beverage can comprising a can body and a can end having a score line on said can end, wherein the coating composition comprises:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

wherein the coating composition is applied to at least the internal surface of the can end over at least a portion of the score line;
and wherein the can, when filled with a carbonated beverage and sealed, exhibits sufficient venting upon rupture of the score line, and
wherein a coating formed from the coating composition has a wet film elongation of ≤20% with:

(i) a wet film Young's modulus of ≥3 GPa;
(ii) a wet film toughness of ≤1 MPa; and/or
(iii) a feathering of ≤5 mm.

There is also provided a method of coating a can comprising a can body and a can end having a score line on said can end, wherein the method comprises applying a coating composition to at least a portion of an internal surface of the can end over at least a portion of the score line, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

wherein the coating composition comprises at least 5 wt% of the acid-functional acrylic material based on the total solid weight of the coating composition,
and wherein the can, when filled with a carbonated beverage and sealed, exhibits sufficient venting upon rupture of the score line.

There is also provided a method of coating a can comprising a can body and a can end having a score line on said can end, wherein the method comprises applying a coating composition to at least a portion of an internal surface of the can end over at least a portion of the score line to from a coating, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

and wherein the can, when filled with a carbonated beverage and sealed, exhibits sufficient venting upon rupture of the score line, and
wherein the coating has a wet film elongation of ≤20% with:

(i) a wet film Young's modulus of ≥3 GPa;
(ii) a wet film toughness of ≤1 MPa; and/or
(iii) a feathering of ≤5 mm.

There is also provided a coating composition, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material having an acid number of at least 100 mg KOH/g.

There is also provided a food and/or beverage packaging coated on at least a portion thereof with a coating, the coating being derived from a coating composition, the coating compositions comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material having an acid number of at least 100 mg KOH/g

There is also provided the use of a coating composition for the reduction or prevention of insufficient venting of a beverage can, the beverage can comprising a can body and a can end having a score line on said can end, wherein the coating composition comprises:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material having an acid number of at least 100 mg KOH/g

wherein the coating composition is applied to at least the internal surface of the can end over at least a portion of the score line;
and wherein the can, when filled with a carbonated beverage and sealed, exhibits sufficient venting upon rupture of the score line.

There is also provided a method of coating a can comprising a can body and a can end having a score line on said can end, wherein the method comprises applying a coating composition to at least a portion of an internal surface of the can end over at least a portion of the score line, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material having an acid number of at least 100 mg KOH/g

and wherein the can, when filled with a carbonated beverage and sealed, exhibits sufficient venting upon rupture of the score line.

## Detail Description of the Invention

The coating composition comprises a first polyester material. The first polyester material may be any suitable polyester material.

The first polyester material may comprise the reaction product of a reaction mixture comprising a polyacid and a polyol. The polyester material may be obtainable by polymerising a polyacid and a polyol.

"Polyacid", and like terms as used herein, refers to a compound having two or more carboxylic acid groups, such as two, three or four acid groups, and includes an ester of the polyacid (wherein one or more of the acid groups is esterified) or an anhydride. The polyacid may be an organic polyacid.

The carboxylic acid groups of the polyacid of the polyester material may be connected by a bridging group selected from: an alkylene group; an alkenylene group; an alkynylene group; or an arylene group.

The first polyester material may be formed from any suitable polyacid. Suitable examples of polyacids include, but are not limited to the following: maleic acid; fumaric acid; itaconic acid; adipic acid; azelaic acid; succinic acid; sebacic acid; glutaric acid; decanoic diacid; dodecanoic diacid; phthalic acid; isophthalic acid; 5-tert-butylisophthalic acid; tetrachlorophthalic acid; tetrahydrophthalic acid; trimellitic acid; naphthalene dicarboxylic acid; naphthalene tetracarboxylic acid; terephthalic acid; hexahydrophthalic acid; methylhexahydrophthalic acid; dimethyl terephthalate; cyclohexane dicarboxylic acid; chlorendic anhydride; 1,3-cyclohexane dicarboxylic acid; 1,4-cyclohexane dicarboxylic acid; tricyclodecane polycarboxylic acid; endomethylene tetrahydrophthalic acid; endoethylene hexahydrophthalic acid; cyclohexanetetra carboxylic acid; cyclobutane tetracarboxylic; esters and anhydrides of all the aforementioned acids and combinations thereof.

The first polyester material may be formed from a diacid. Suitable examples of diacids include, but are not limited to the following: phthalic acid; isophthalic acid; terephthalic acid; 1,4 cyclohexane dicarboxylic acid; succinic acid; adipic acid; azelaic acid; sebacic acid; fumaric acid; 2,6-naphthalene dicarboxylic acid; orthophthalic acid; phthalic anhydride; tetrahydrophthalic anhydride; maleic anhydride; succinic anhydride; itaconic anhydride; di-ester materials, such as dimethyl ester derivatives for example dimethyl isophthalate, dimethyl terephthalate, dimethyl 1,4-cyclohexane dicarboxylate, dimethyl 2,6-naphthalene di carboxylate, dimethyl fumarate, dimethyl orthophthalate, dimethylsuccinate, dimethyl glutarate, dimethyl adipate; esters and anhydrides of all the aforementioned acids; and mixtures thereof.

The first polyester material may be formed from phthalic acid, isophthalic acid, terephthalic acid, 1,4-cyclohexane dicarboxylic acid, succinic acid, sebacic acid, methyltetrahydrophthalic acid, methylhexahydrophthalic acid, tetrahydrophthalic acid, dodecane dioic acid, adipic acid, azelaic acid, naphthylene dicarboxylic acid, pyromellitic acid, dimer fatty acids and/or trimellitic acid.

"Polyol" and like terms, as used herein, refers to a compound having two or more hydroxyl groups, such as two, three or four hydroxyl groups. The hydroxyl groups of the polyol may be connected by a bridging group selected from: an alkylene group; an alkenylene group; an alkynylene group; or an arylene group. The polyol may be an organic

polyol.

The first polyester material may be formed from any suitable polyol. Suitable examples of polyols include, but are not limited to the following: alkylene glycols, such as ethylene glycol; propylene glycol; diethylene glycol; dipropylene glycol; triethylene glycol; tripropylene glycol; hexylene glycol; polyethylene glycol; polypropylene glycol and neopentyl glycol; hydrogenated bisphenol A; cyclohexanediol; propanediols including 1,2-propanediol; 1,3-propanediol; butyl ethyl propanediol; 2-methyl-1,3-propanediol; and 2-ethyl-2-butyl-1,3-propanediol; butanediols including 1,4-butanediol; 1,3-butanediol; and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-capro lactone and ethylene glycol); hydroxyalkylated bisphenols; polyether glycols, for example, poly(oxytetramethylene) glycol; trimethylol propane; pentaerythritol; di-pentaerythritol; trimethylol ethane; trimethylol butane; dimethylol cyclohexane; glycerol and the like or combinations thereof.

The first polyester material may be formed from a diol. Suitable examples of diols include, but are not limited to the following: ethylene glycol; 1,2-propane diol; 1,3-propane diol; 1,2-butandiol; 1,3-butandiol; 1,4-butandiol; but-2-ene 1,4-diol; 2,3-butane diol; 2-methyl 1,3-propane diol; 2,2'-dimethyl 1,3-propanediol (neopentyl glycol); 1,5 pentane diol; 3-methyl 1,5-pentanediol; 2,4-diethyl 1,5-pentane diol; 1,6-hexane diol; 2-ethyl 1,3-hexane diol; diethylene glycol; triethylene glycol; dipropylene glycol; tripropylene glycol; 2,2,4-trimethyl pentane 1,3-diol; 1,4 cyclohexane dimethanol; tricyclodecane dimethanol; 2,2,4,4-tetramethyl cyclobutane 1,3-diol; isosorbide; 1,4-cyclohexane diol; 1,1'-isopropylidene-bis (4-cyclohexanol); and mixtures thereof.

The first polyester material may be formed from ethylene glycol, 1,3-propanediol, diethylene glycol, dipropylene glycol, triethylene glycol, 1,4-butanediol, 2-methyl-1,3-propanediol, 1,4-cyclohexane dimethanol, 1,6-hexanediol, neopentyl glycol, trimethylolpropane and glycerol.

The first polyester material may optionally be formed from additional monomers. The first polyester material may optionally include an additional monomer selected from monoacids or monohydric alcohols or combinations thereof. The optional additional monomer may be organic.

The first polyester material may optionally be formed from additional monoacids. "Monoacid", and like terms as used herein, refers to compounds having one carboxylic acid group and includes an ester of the monoacid (where the acid group is esterified) or an anhydride. The monoacid may be an organic monoacid.

The first polyester material may optionally be formed from any suitable additional monoacid. Suitable examples include, but are not limited to the following: benzoic acid; cyclohexane carboxylic acid; tricyclodecane carboxylic acid; camporic acid; benzoic acid; t-butyl benzoic acid; C1-C18 aliphatic carboxylic acids such as acetic acid; propanoic acid; butanoic acid; hexanoic acid; oleic acid; linoleic acid; undecanoic acid; lauric acid; isononanoic acid; fatty acids; hydrogenated fatty acids of naturally occurring oils; esters and/or anhydrides of any of the aforementioned acids and combinations thereof.

The first polyester material may optionally be formed from additional monohydric alcohols. "Monohydric alcohol" and like terms as used herein, refers to compounds having one hydroxyl group. The monohydric alcohol may be an organic monohydric alcohol.

The first polyester material may optionally be formed from any suitable additional monohydric alcohol. Suitable examples include but are not limited to the following: benzyl alcohol; hydroxyethoxybenzene; methanol; ethanol; propanol; butanol; pentanol; hexanol; heptanol; dodecyl alcohol; stearyl alcohol; oleyl alcohol; undecanol; cyclohexanol; phenol; phenyl carbinol; methylphenyl carbinol; cresol; monoethers of glycols; halogen-substituted or other substituted alcohols and combinations thereof.

The first polyester material may comprise polymers or copolymers formed from the reaction of diols and diacids; polyols or polyacid components may optionally be used to produce branched polymers. Examples of suitable additional polyacids which can optionally be used to produce branched polymers include, but are not limited to the following: trimellitic anhydride; trimellitic acid; pyromellitic acid; esters and anhydrides of all the aforementioned acids; and mixtures thereof. Examples of suitable additional polyols which can optionally be used to produce branched polymers include, but are not limited to the following: glycerine; trimethylol propane; trimethylol ethane; 1,2,6 hexane triol; pentaerythritol; erythritol; di-trimethylol propane; di-pentaerythritol; N,N,N',N' tetra (hydroxyethyl)adipindiamide; N,N,N'N' tetra (hydroxypropyl)adipindiamide; other, primarily hydroxyl, functional branching monomers; or mixtures thereof.

The term "alk" or "alkyl", as used herein unless otherwise defined, relates to saturated hydrocarbon radicals being straight, branched, cyclic or polycyclic moieties or combinations thereof and contain 1 to 20 carbon atoms, such as 1 to 10 carbon atoms, such as 1 to 8 carbon atoms, such as 1 to 6 carbon atoms, or even 1 to 4 carbon atoms. These radicals may be optionally substituted with a chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, aryl or Het, wherein $R^{19}$ to $R^{27}$ each independently represent hydrogen, aryl or alkyl, and/or be interrupted by oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which

would be represented as $-CH_3$, becomes methylene, $-CH_2-$, when represented as an alkylene. Other alkylene groups should be understood accordingly.

The term "alkenyl", as used herein, relates to hydrocarbon radicals having, such as up to 4, double bonds, being straight, branched, cyclic or polycyclic moieties or combinations thereof and containing from 2 to 18 carbon atoms, such as 2 to 10 carbon atoms, such as from 2 to 8 carbon atoms, such as 2 to 6 carbon atoms, or even 2 to 4 carbon atoms. These radicals may be optionally substituted with a hydroxyl, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or alkyl, and/or be interrupted by oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having, such as up to 4, triple bonds, being straight, branched, cyclic or polycyclic moieties or combinations thereof and having from 2 to 18 carbon atoms, such as 2 to 10 carbon atoms, such as from 2 to 8 carbon atoms, such as from 2 to 6 carbon atoms, or even from 2 to 4 carbon atoms. These radicals may be optionally substituted with a hydroxy, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or lower alkyl, and/or be interrupted by oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C=CH, becomes ethynylene, -C=C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or lower alkyl, and/or be interrupted by oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

The first polyester material may have any suitable glass transition temperature (Tg). The first polyester material may have a Tg of at least -20°C, such as at least -10°C. The first polyester may have a Tg up to 150°C, such as up to 125°C, such as up to 100°C, such as up to 75°C, such as up to 50°C, such as up to 40°C.

The first polyester material may have a Tg of up to 50°C.

The first polyester material may have a Tg from -20 to 50°C, such as from -10 to 50°C.

The first polyester material may have a Tg from -20 to 40°C, such as from -10 to 40°C.

The first polyester material may have a Tg of at least 50°C.

The first polyester material may have a Tg from 50 to 150°C.

As reported herein, the Tg was measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min). All values for Tg reported herein were measured in this way.

The first polyester material may have any suitable number average molecular weight (Mn). The first polyester material may have an Mn of at least 500 Daltons (Da = g/mole), such as at least 1,000 Da. The first polyester material may have an Mn of up to 100,000 Da, such as up to 75,000 Da, such as up to 50,000 Da, such as up to 25,000 Da, or even up to 20,000 Da. The first polyester material may have an Mn from 500 to 100,000 Da, such as from 500 to 75,000

Da, such as from 500 to 50,000 Da, such as from 500 to 25,000 Da, or even from 500 to 20,000 Da. The first polyester material may have an Mn from 1,000 to 100,000 Da, such as from 1,000 to 75,000 Da, such as from 1,000 to 50,000 Da, such as from 1,000 to 25,000 Da, or even from 1,000 to 20,000 Da.

The first polyester material may have an Mn from 1,000 to 20,000 Da.

As reported herein, the Mn was determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml). All values for Mn reported herein were measured in this way.

The first polyester material may have any suitable weight average molecular weight (Mw). The first polyester material may have an Mw of at least 500 Daltons (Da = g/mole), such as at least 1,000 Da. The first polyester material may have an Mw of up to 100,000 Da, such as up to 75,000 Da, such as up to 50,000 Da, such as up to 25,000 Da, or even up to 20,000 Da. The first polyester material may have an Mw from 500 to 100,000 Da, such as from 500 to 75,000 Da, such as from 500 to 50,000 Da, such as from 500 to 25,000 Da, or even from 500 to 20,000 Da. The first polyester material may have an Mw from 1,000 to 100,000 Da, such as from 1,000 to 75,000 Da, such as from 1,000 to 50,000 Da, such as from 1,000 to 25,000 Da, or even from 1,000 to 20,000 Da.

The first polyester material may have an Mw from 1,000 to 20,000 Da.

As reported herein, the Mw was determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml). All values for the Mw reported herein were measured this way.

The first polyester material may have any suitable acid number (or 'AN'; also known as acid value or 'AV'). The first polyester material may have an acid number of at least 0 mg KOH/g. The first polyester material may have an acid number of up to 50 mg KOH/g, such as up to 25 mg KOH/g, such as up to 20 mg KOH/g, such as up to 15 mg KOH/g, such as up to 10 mg KOH/g, or even up to 5 mg KOH/g. The first polyester material may have an acid number from 0 to 50 mg KOH/g, such as from 0 to 25 mg KOH/g, such as from 0 to 20 mg KOH/g, such as from 0 to 15 mg KOH/g, such as from 0 to 10 mg KOH/g, or even from 0 to 5 mg KOH/g.

The first polyester material may have an acid number from 0 to 10 mg KOH/g, such as from 0 to 5 mg KOH/g.

The acid number is suitably expressed on solids.

As reported herein, the acid number was determined by titration with 0.1N methanolic potassium hydroxide solution. The sample of polymer (0.1 - 3 grams depending on acid number) was weighed accurately (on a balance with accuracy to weigh in milligrams) into a conical flask and was then dissolved in 25 millilitres of a solvent mixture containing dichloromethane and ethanol (3/1 w/w) and a few drops of 0.1% solution bromo thymol blue indicator; using light heating and stirring as appropriate. The solution was then cooled to room temperature (20 - 30 °C) and the solution titrated with the potassium hydroxide solution. The resulting acid number is expressed in units of mg KOH/g and is calculated using the following equation:

$$\text{Acid Number} = (\text{titre KOH solution (mls)} \times \text{Molarity KOH solution} \times 56.1) / \text{Weight of solid sample (grams)}$$

All values for acid number reported herein were measured in this way.

The first polyester material may have any suitable hydroxyl number (or 'OHN'; also known as hydroxyl value or 'OHV'). The first polyester material may have a hydroxyl number of at least 10 mg KOH/g, such as at least 20 mg KOH/g, such as at least 30 mg KOH/g, such as at least 40 mg KOH/g, such as at least 50 mg KOH/g, such as at least 60 mg KOH/g, or even at least 70 mg KOH/g. The first polyester material may have a hydroxyl value of up to 250 mg KOH/g, such as up to 200 mg KOH/g, such as up to 150 mg KOH/g. The first polyester material may have a hydroxyl number from 10 to 250 mg KOH/g, such as from 20 to 250 mg KOH/g, such as from 30 to 250 mg KOH/g, such as from 40 to 250 mg KOH/g, such as from 50 to 250 mg KOH/g, such as from 60 to 250 mg KOH/g, or even from 70 to 250 mg KOH/g. The first polyester material may have a hydroxyl number from 10 to 200 mg KOH/g, such as from 20 to 200 mg KOH/g, such as from 30 to 200 mg KOH/g, such as from 40 to 200 mg KOH/g, such as from 50 to 200 mg KOH/g, such as from 60 to 200 mg KOH/g, or even from 70 to 200 mg KOH/g. The first polyester material may have a hydroxyl number from 10 to 150 mg KOH/g, such as from 20 to 150 mg KOH/g, such as from 30 to 150 mg KOH/g, such as from 40 to 150 mg KOH/g, such as from 50 to 150 mg KOH/g, such as from 60 to 150 mg KOH/g, such as from 70 to 150 mg KOH/g.

The first polyester material may have a hydroxyl number from 50 to 200 mg KOH/g, or even from 70 to 150 mg KOH/g.

The hydroxyl value (OHV) is suitably expressed on solids.

As reported herein, the hydroxyl number is the number of mg of KOH equivalent to the hydroxyl groups in 1g of material. In such as method, a sample (typically, 0.1 to 3g) was weighed accurately into a conical flask and is dissolved, using light heating and stirring as appropriate, in 20ml of tetrahydrofuran. 10ml of 0.1M 4-(dimethylamino)pyridine in tetrahydrofuran (catalyst solution) and 5ml of a 9 vol% solution of acetic anhydride in tetrahydrofuran (i.e. 90ml acetic anhydride in 910ml tetrahydrofuran; acetylating solution) were then added to the mixture. After 5 minutes, 10ml of an 80 vol% solution of tetrahydrofuran (i.e. 4 volume parts tetrahydrofuran to 1 part distilled water; hydrolysis solution) was added. After 15 minutes, 10ml tetrahydrofuran was added and the solution is titrated with 0.5M ethanolic potassium hydroxide (KOH). A blank sample was also run where the sample of solid polyester is omitted. The resulting hydroxyl number is expressed in units of mg KOH/g and is calculated using the following equation:

$$\text{Hydroxyl number} = ((V_2 - V_1) \times \text{molarity of KOH solution (M)} \times 56.1) / \text{weight of solid sample (g)}$$

wherein $V_1$ is the titre of KOH solution (ml) of the polyester sample and $V_2$ is the titre of KOH solution (ml) of the blank sample.

All values for hydroxyl number reported herein were measured in this way.

The coating compositions may comprise any suitable amount of the first polyester material. The coating composition may comprise at least 5 wt%, such as at least 10 wt%, such as at least 20 wt%, such as at least 30 wt%, such as at least 40 wt%, or even at least 50 wt% based on the total solid weight of the coating composition. The coating composition may comprise up to 94.95 wt%, such as up to 94.9 wt%, such as up to 90 wt%, such as up to 85 wt%, such as up to 80 wt%, such as up to 70 wt%, or even up to 60 wt% of the first polyester material based on the total solid weight of the coating composition. The coating composition may comprise from 5 to 94.95 wt%, such as from 10 to 94.95 wt%, such as from 20 to 94.95 wt%, such as from 30 to 94.95 wt%, such as from 40 to 94.95 wt%, or even from 50 to 94.95 wt% of the first polyester material based on the total solid weight of the coating composition. The coating composition may comprise from 5 to 94.9 wt%, such as from 10 to 94.9 wt%, such as from 20 to 94.9 wt%, such as from 30 to 94.9 wt%, such as from 40 to 94.9 wt%, or even from 50 to 94.9 wt% of the first polyester material based on the total solid weight of the coating composition. The coating composition may comprise from 5 to 90 wt%, such as from 10 to 90 wt%, such as from 20 to 90 wt%, such as from 30 to 90 wt%, such as from 40 to 90 wt%, or even from 50 to 90 wt% of the first polyester material based on the total solid weight of the coating composition. The coating composition may comprise from 5 to 80 wt%, such as from 10 to 80 wt%, such as from 20 to 80 wt%, such as from 30 to 80 wt%, such as from 40 to 80 wt%, or even from 50 to 80 wt% of the first polyester material based on the total solid weight of the coating composition. The coating composition may comprise from 5 to 90 wt%, such as from 10 to 70 wt%, such as from 20 to 70 wt%, such as from 30 to 70 wt%, such as from 40 to 70 wt%, or even from 50 to 70 wt% of the first polyester material based on the total solid weight of the coating composition. The coating composition may comprise from 5 to 60 wt%, such as from 10 to 60 wt%, such as from 20 to 60 wt%, such as from 30 to 60 wt%, such as from 40 to 60 wt%, or even from 50 to 60 wt% of the first polyester material based on the total solid weight of the coating composition.

The coating composition may comprise from 30 to 90 wt%, such as from 40 to 70 wt%, or even from 50 to 60 wt% of the first polyester material based on the total solid weight of the coating composition.

The coating composition comprises a second polyester material. The second polyester material is different from the first polyester material. The second polyester material comprises the reaction product of a reaction mixture comprising (i) a polyacid, (ii) a polyol and (iii) phosphorus acid.

The second polyester material may comprise the reaction product of a mixture comprising a precursor polyester resin with a phosphorous acid. The precursor polyester resin may have a hydroxyl number from 20 to 75 mg KOH/g. The precursor polyester resin may have an acid value of 15 to 20 mg KOH/g. The precursor polyester resin may have a number average molecular weight (Mn) from 2,000 to 10,000 Da.

Accordingly, the second polyester material may comprise the reaction product of a reaction mixture comprising:

(I) a precursor polyester resin having an Mn of 2,000 to 10,000, a hydroxyl number of 20 to 75 and an acid value of 15 to 25, wherein the precursor polyester resin comprises the polycondensate of a reaction mixture comprising:

- (i) a polyacid, and
- (ii) a polyol, and

(II) a phosphorous acid.

The polyester may contain both acid functionality (i.e. carboxylic acid functionality) and hydroxyl functionality.

The precursor polyester resin may comprise the reaction product of a reaction mixture comprising a polyacid and a polyol. The precursor polyester resin may comprise the reaction product of a reaction mixture comprising a polyacid or anhydride and at least one polyol, such as a mixture of diols and/or triols. The polyacid may comprise an alpha, beta-ethylenically unsaturated polycarboxylic acid or anhydride.

The precursor polyester resin may comprise the reaction product of a reaction mixture comprising an alpha, beta-ethylenically unsaturated polycarboxylic acid and a polyol, such as a mixture of a diol and triol. The polyacid may comprise an alpha, beta-ethylenically unsaturated polycarboxylic and an aromatic and/or aliphatic polyacid. As such, the precursor polyester resin may comprise the reaction product of a reaction mixture comprising an alpha, beta-ethylenically unsaturated polycarboxylic acid, an aromatic and/or aliphatic polyacid and a polyol, such as a mixture of a diol and triol.

The polyol and polyacid may be combined in desired proportions and chemically reacted using standard esterification (condensation) procedures to provide a precursor polyester resin having both hydroxyl and carboxylic acid groups. A triol may be used to provide a branched, as opposed to linear, precursor polyester resin.

Examples of suitable polyacids include, but are not limited to, the following: maleic anhydride; maleic acid; fumaric acid; itaconic acid; phthalic acid; phthalic anhydride; isophthalic acid; trimellitic anhydride; terephthalic acid; naphthalene dicarboxylic acid; adipic acid; azelaic acid; succinic acid; sebacic acid; and combinations thereof.

When used, the aromatic and/or aliphatic polyacid may be used in amounts of up to 70 wt%, such as from 50 to 65 wt% based on total solid weight of the polyacid.

Examples of suitable diols, triols and polyols include, but are not limited to the following: ethylene glycol; propylene glycol; 1,3-propanediol, glycerol; diethylene glycol; dipropylene glycol; triethylene glycol; trimethylolpropane; trimethylolethane; tripropylene glycol; neopentyl glycol; pentaerythritol; 1,4-butanediol; trimethylol propane; hexylene glycol; cyclohexane dimethanol; polyethylene; polypropylene glycol; and combinations thereof.

As mentioned above, the polyol component may be a mixture of a diol and a triol. Any suitable weight ratio of diol to triol may be used. The weight ratio of diol to triol may be from 0.5 to 10 to 1.

The equivalent ratio of polyol to polyacid may be from 0.9 to 1.1 to 1.0.

The phosphorus acid which is reacted with the precursor polyester resin may be phosphinic acid, phosphonic acid or phosphoric acid.

The phosphorous acid may be phosphoric acid. The phosphoric acid may be in the form of an aqueous solution, such as orthophosphoric acid, which may be approximately 85.5 vol%, for example. As a further non-limiting example, the phosphoric acid may be 100 vol% phosphoric acid or super phosphoric acid. The phosphoric acid may be a condensation product, such as, for example, pyrophosphoric acid, metaphosphoric acid or phosphoric anhydride.

The phosphorous acid, such as phosphoric acid, may be provided in amounts of 0.2 to 0.5 equivalents of phosphorous acid per hydroxyl equivalent of the precursor polyester resin, i.e., 0.2 to 0.45 P-OH groups per hydroxyl group.

The reaction of the phosphorus acid with the precursor polyester resin my be conducted in organic solvent. The organic solvent may be an aromatic solvent, a ketone or an ester having a boiling point of 65 to 250°C. Examples of suitable solvents include, for example, methyl ethyl ketone, methyl isobutyl ketone, butyl glycol acetate, methoxypropyl acetate and combinations thereof. The organic solvent for the reaction may be present in any suitable amount. The organic solvent for the reaction may be present in amounts from 20 to 50 wt% based on total weight of phosphorus acid, precursor polyester resin and organic solvent.

The reactants and the organic solvent may be mixed at any suitable temperature. The reactants and the organic solvent may be mixed at a temperature from 50 °C to 95 °C. Once the reactants are contacted, the reaction mixture may be maintained at any suitable temperature, such as at a temperature of from 90 °C. to 200 °C. The reaction may be allowed to proceed for any suitable period of time, such as from 45 minutes to 6 hours.

The second polyester material may be present in the coating composition in any suitable amount. The coating composition may comprise up to 10 wt%, such as up to 9 wt%, such as up to 8 wt%, such as up to 7 wt%, such as up to 6 wt%, or even up to 5 wt% of the second polyester material based on the total solid weight of the coating composition. The coating composition may comprise at least 0.05 wt%, such as at least 0.1 wt% of the second polyester material based on the total solid weight of the coating composition.

The coating composition may comprise from 0.05 to 10 wt%, such as from 0.05 to 9 wt%, such as from 0.05 to 8 wt%, such as from 0.05 to 7 wt%, such as from 0.05 to 6 wt%, or even from 0.05 to 5 wt% of the second polyester material based on the total solid weight of the coating composition. The coating composition may comprise from 0.1 to 10 wt%, such as from 0.1 to 9 wt%, such as from 0.1 to 8 wt%, such as from 0.1 to 7 wt%, such as from 0.1 to 6 wt%, or even from 0.1 to 5 wt% of the second polyester material based on the total solid weight of the coating composition.

The coating composition comprises an acid-functional acrylic material.

By "acid-functional", and like terms as used herein, is meant that the acid-functional acrylic material comprises one or more pendant acid groups, such as pendant carboxylic acid groups. The pendant acid groups may be end groups

or may be on the backbone of the acid-functional acrylic material.

The acid-functional acrylic material may have any suitable acid number (AN). The acid-functional acrylic material may have an acid number of at least 10 mg KOH/g, such as at least 25 mg KOH/g, such as at least 50 mg KOH/g, such as at least 75 mg KOH/g, such as at least 100 mg KOH/g, such as at least 125 mg KOH/g, such as at least 150 mg KOH/g, such as at least 175 mg KOH/g, such as at least 200 mg KOH/g. The acid-functional acrylic material may have an acid number of up to 500 mg KOH/g, such as up to 475 mg KOH/g, such as up to 450 mg KOH/g, such as up 425 mg KOH/g, such as up to 400 mg KOH/g, such as up to 375 mg KOH/g, such as up to 350 mg KOH/g, such as up to 325 mg KOH/g, such as up to 300 mg KOH/g, or even up to 250 mg KOH/g.

The acid-functional acrylic material may have an acid number from 10 to 500 mg KOH/g, such as from 10 to 475 mg KOH/g, such as from 10 to 450 mg KOH/g, such as from 10 to 425 mg KOH/g, such as from 10 to 400 mg KOH/g, such as from 10 to 375 mg KOH/g, such as from 10 to 350 mg KOH/g, such as from 10 to 325 mg KOH/g, such as from 10 to 300 mg KOH/g, or even from 10 to 250 mg KOH/g. The acid-functional acrylic material may have an acid number from 25 to 500 mg KOH/g, such as from 25 to 475 mg KOH/g, such as from 25 to 450 mg KOH/g, such as from 25 to 425 mg KOH/g, such as from 25 to 400 mg KOH/g, such as from 25 to 375 mg KOH/g, such as from 25 to 350 mg KOH/g, such as from 25 to 325 mg KOH/g, such as from 25 to 300 mg KOH/g, or even from 25 to 250 mg KOH/g. The acid-functional acrylic material may have an acid number from 50 to 500 mg KOH/g, such as from 50 to 475 mg KOH/g, such as from 50 to 450 mg KOH/g, such as from 50 to 425 mg KOH/g, such as from 50 to 400 mg KOH/g, such as from 50 to 375 mg KOH/g, such as from 50 to 350 mg KOH/g, such as from 50 to 325 mg KOH/g, such as from 50 to 300 mg KOH/g, or even from 50 to 250 mg KOH/g. The acid-functional acrylic material may have an acid number from 75 to 500 mg KOH/g, such as from 75 to 475 mg KOH/g, such as from 75 to 450 mg KOH/g, such as from 75 to 425 mg KOH/g, such as from 75 to 400 mg KOH/g, such as from 75 to 375 mg KOH/g, such as from 75 to 350 mg KOH/g, such as from 75 to 325 mg KOH/g, such as from 75 to 300 mg KOH/g, or even from 75 to 250 mg KOH/g. The acid-functional acrylic material may have an acid number from 100 to 500 mg KOH/g, such as from 100 to 475 mg KOH/g, such as from 100 to 450 mg KOH/g, such as from 100 to 425 mg KOH/g, such as from 100 to 400 mg KOH/g, such as from 100 to 375 mg KOH/g, such as from 100 to 350 mg KOH/g, such as from 100 to 325 mg KOH/g, such as from 100 to 300 mg KOH/g, or even from 100 to 250 mg KOH/g. The acid-functional acrylic material may have an acid number from 125 to 500 mg KOH/g, such as from 125 to 475 mg KOH/g, such as from 125 to 450 mg KOH/g, such as from 125 to 425 mg KOH/g, such as from 125 to 400 mg KOH/g, such as from 125 to 375 mg KOH/g, such as from 125 to 350 mg KOH/g, such as from 125 to 325 mg KOH/g, such as from 125 to 300 mg KOH/g, or even from 125 to 250 mg KOH/g. The acid-functional acrylic material may have an acid number from 150 to 500 mg KOH/g, such as from 150 to 475 mg KOH/g, such as from 150 to 450 mg KOH/g, such as from 150 to 425 mg KOH/g, such as from 150 to 400 mg KOH/g, such as from 150 to 375 mg KOH/g, such as from 150 to 350 mg KOH/g, such as from 150 to 325 mg KOH/g, such as from 150 to 300 mg KOH/g, or even from 150 to 250 mg KOH/g. The acid-functional acrylic material may have an acid number from 175 to 500 mg KOH/g, such as from 175 to 475 mg KOH/g, such as from 175 to 450 mg KOH/g, such as from 175 to 425 mg KOH/g, such as from 175 to 400 mg KOH/g, such as from 175 to 375 mg KOH/g, such as from 175 to 350 mg KOH/g, such as from 175 to 325 mg KOH/g, such as from 175 to 300 mg KOH/g, or even from 175 to 250 mg KOH/g. The acid-functional acrylic material may have an acid number from 200 to 500 mg KOH/g, such as from 200 to 475 mg KOH/g, such as from 200 to 450 mg KOH/g, such as from 200 to 425 mg KOH/g, such as from 200 to 400 mg KOH/g, such as from 200 to 375 mg KOH/g, such as from 200 to 350 mg KOH/g, such as from 200 to 325 mg KOH/g, such as from 200 to 300 mg KOH/g, or even from 200 to 250 mg KOH/g.

The acid-functional acrylic material may have an acid number of at least 100 mg KOH/g.

The acid-functional acrylic material may have an acid number of at least 150 mg KOH/g
The acid-functional acrylic material may have an acid number of at least 200 mg KOH/g.

The acid-functional acrylic material may have an acid number from 100 to 250 mg KOH/g.

The acid-functional acrylic material may have an acid number from 150 to 250 mg KOH/g.

The acid-functional acrylic material may have an acid number from 200 to 250 mg KOH/g.

The acid-functional acrylic material may have an acid number of at least 300 mg KOH/g.

The acid-functional acrylic material may have an acid number of at least 400 mg KOH/g.

The acid number is suitably expressed on solids. A person skilled in the art will appreciate that methods to measure the acid number of the first polyester material, as defined above, may also be applied to measure the acid number of the acid-functional acrylic material.

The coating composition may comprise ≥1 wt% of the acid-functional acrylic material based on the total solid weight of the coating composition, such as ≥2 wt% or ≥3 wt% or ≥4 wt%. The coating composition may comprise ≥5 wt% of the acid-functional acrylic material based on the total solid weight of the coating composition.

The coating composition may comprise at least 6 wt%, such as at least 7 wt%, such as at least 8 wt%, or even at least 9 wt% of the acid functional polyester material based on the total solid weight of the coating composition.

The coating composition may comprise up to 50 wt%, such as up to 45 wt%, such as up to 40 wt%, such as up to 35 wt%, such as up to 30 wt%, such as up to 25 wt%, such as up to 20 wt%, such as up to 15 wt%, such as up to

12 wt%, or even up to 10 wt% of the acid-functional acrylic material based on the total solid weight of the coating composition.

The coating composition may comprise up to 10 wt% of the acid-functional acrylic material based on the total solid weight of the coating composition.

The coating composition may comprise from 5 to 50 wt%, such as from 5 to 45 wt%, such as from 5 to 40 wt%, such as from 5 to 35 wt%, such as from 5 to 30 wt%, such as from 5 to 25 wt%, such as from 5 to 20 wt%, such as from 5 to 15 wt%, such as from 5 to 12 wt%, or even from 5 to 10 wt% of the acid-functional acrylic material based on the total solid weight of the coating composition. The coating composition may comprise from 6 to 50 wt%, such as from 6 to 45 wt%, such as from 6 to 40 wt%, such as from 6 to 35 wt%, such as from 6 to 30 wt%, such as from 6 to 25 wt%, such as from 6 to 20 wt%, such as from 6 to 15 wt%, such as from 6 to 12 wt%, or even from 6 to 10 wt% of the acid-functional acrylic material based on the total solid weight of the coating composition. The coating composition may comprise from 7 to 50 wt%, such as from 7 to 45 wt%, such as from 7 to 40 wt%, such as from 7 to 35 wt%, such as from 7 to 30 wt%, such as from 7 to 25 wt%, such as from 7 to 20 wt%, such as from 7 to 15 wt%, such as from 7 to 12 wt%, or even from 7 to 10 wt% of the acid-functional acrylic material based on the total solid weight of the coating composition. The coating composition may comprise from 8 to 50 wt%, such as from 8 to 45 wt%, such as from 8 to 40 wt%, such as from 8 to 35 wt%, such as from 8 to 30 wt%, such as from 8 to 25 wt%, such as from 8 to 20 wt%, such as from 8 to 15 wt%, such as from 8 to 12 wt%, or even from 8 to 10 wt% of the acid-functional acrylic material based on the total solid weight of the coating composition. The coating composition may comprise from 9 to 50 wt%, such as from 9 to 45 wt%, such as from 9 to 40 wt%, such as from 9 to 35 wt%, such as from 9 to 30 wt%, such as from 9 to 25 wt%, such as from 9 to 20 wt%, such as from 9 to 15 wt%, such as from 9 to 12 wt%, or even from 9 to 10 wt% of the acid-functional acrylic material based on the total solid weight of the coating composition.

The coating composition may comprise from 5 to 20 wt% of the acid-functional acrylic material based on the total solid weight of the coating composition.

The coating composition may comprise from 5 to 15 wt% of the acid-functional acrylic material based on the total solid weight of the coating composition.

The coating composition may comprise from 8 to 10 wt% of the acid-functional acrylic material based on the total solid weight of the coating composition.

The coating composition may comprise up to 10 wt% of the acid-functional acrylic material based on the total solid weight of the coating composition.

The coating composition may comprise 10 wt% of the acid-functional acrylic material based on the total solid weight of the coating composition.

The acid-functional acrylic material may be any suitable acid-functional acrylic material. The acid-functional acrylic material may be formed from one or more acrylic monomer(s). Suitable acrylic monomers will be well known to a person skilled in the art. The acid-functional acrylic material may be formed from more than one acrylic monomer. Suitable acrylic monomers include, but are not limited to, alkyl (alk)acrylate, such as $C_1$ to $C_6$ alkyl ($C_1$ to $C_6$ alk)acrylate, for example, $C_1$ to $C_6$ alkyl (meth)acrylate, and (alk)acrylic acid, such as ($C_1$ to $C_6$ alk)acrylic acid. The acrylic monomers may comprise one or more functional group, such as an epoxy group. For example, the acrylic monomers may comprise glycidyl methacrylate.

The terms "(alk)acrykate", "(meth)acrylate" and like terms as used herein are used conventionally and herein to refer to both alkacrylate and acrylate, such as methacrylate and acrylate.

Examples of suitable acrylic monomers include, but are not limited to, acrylic acid, methacrylic acid, methyl acrylate; methyl methacrylate; ethyl acrylate; ethyl methacrylate; propyl acrylate; propyl methacrylate; butyl acrylate; butyl methacrylate, isobornyl acrylate, isobornyl methacrylate, hydroxyethyl acrylate, hydroxyethyl methacrylate, 2-ethylhexyl acrylate, 2-ethylhexyl methacrylate, glycidyl methacrylate; ethylene glycol diacrylate; ethylene glycol dimethacrylate; 1,6-hexanediol diacrylate; 1,6-hexanediol dimethacrylate; 4-hydroxybutyl acrylate; 4-hydroxybutyl methacrylate; allyl methacrylate; benzyl methacrylate; phosphate esters of 2-hydroxyethyl methacrylate; those sold under the trade name SIPOMER such as SIPOMER PAM-100, SIPOMER PAM-200 and SIPOMER PAM-300 (phosphate esters of polypropylene glycol monoacrylate commercially available from Solvay); and combinations thereof. Any other acrylic monomers known to those skilled in the art could also be used.

The acid-functional acrylic material may be formed from acrylic monomers comprising (alk)acrylic acid, such as ($C_1$ to $C_6$ alk)acrylic acid.

The acid-functional acrylic material may be formed from acrylic monomers comprising methacrylic acid, acrylic acid or combinations thereof.

The acid-functional acrylic material may be formed from acrylic monomers comprising ethyl acrylate, methyl acrylate, butyl methacrylate, methacrylic acid, acrylic acid or combinations thereof.

The acid-functional acrylic material may be formed from acrylic monomers comprising ethyl acrylate, methacrylic acid or combinations thereof.

The acid-functional acrylic material may be formed from acrylic monomers comprising methyl acrylate, butyl

methacrylate, methacrylic acid, acrylic acid or combinations thereof.

The solution polymerised acrylic material may comprise methacrylic acid and/or acrylic acid. The solution polymerised acrylic material may be formed from one or more additional ethylenically unsaturated monomer(s). Suitable additional ethylenically unsaturated monomers include, but are not limited to, aryl substituted ethylenically unsaturated monomers such as, for example, styrene; ethylenically unsaturated nitriles such as, for example, acrylonitrile or methacrylonitrile; and combinations thereof.

For the avoidance of doubt, an acrylic material in the context of the present invention is a material formed from at least one acrylic monomer (as defined herein). The acid-functional acrylic material may comprise any suitable amount of acrylic monomer(s). For example, the acid-functional acrylic material may comprise at least 10 wt%, such as at least 20 wt%, such as at least 30 wt%, such as at least 40 wt%, such as at least 50 wt%, such as at least 60 wt%, such as at least 70 wt%, such as at least 80 wt%, or even at least 90 wt% of acrylic monomer(s) based on the total solid weight of the monomers from which the acid-functional acrylic material is formed. The acid-functional acrylic material may comprise up to 100 wt% of acrylic monomer(s) based on the total solid weight of the monomers from which the acid-functional acrylic material is formed.

The acid-functional acrylic material may comprise from 10 to 100 wt% of acrylic monomer(s) based on the total solid weight of the monomers from which the acid-functional acrylic material is formed.

For example, the acid-functional acrylic material may comprise up to 90 wt% of one or more additional ethylenically unsaturated monomer(s) based on the total solid weight of the monomers from which the acid-functional acrylic material is formed. The acid-functional acrylic material may comprise up to 80 wt%, such as up to 70 wt%, such as up to 60 wt%, such as up to 50 wt%, such as up to 40 wt%, such as up to 30 wt%, such as up to 20 wt%, or even up to 10 wt% of one or more additional ethylenically unsaturated monomer(s) based on the total solid weight of the monomers from which the acid-functional acrylic material is formed. The acid-functional acrylic material may comprise no, i.e. 0 wt%, additional ethylenically unsaturated monomers based on the total solid weight of the monomers from which the acid-functional acrylic material is formed.

The acid-functional acrylic material may suitably be formed from monomers comprising (alk)acrylic acid, such as ($C_1$ to $C_6$ alk)acrylic acid.

The acid-functional acrylic material may be formed from monomers comprising methacrylic acid, acrylic acid or combinations thereof.

The acid-functional acrylic material may be formed from monomers comprising ethyl acrylate, methyl acrylate, butyl methacrylate, methacrylic acid, acrylic acid, styrene or combinations thereof.

The acid-functional acrylic material may be formed from monomers comprising ethyl acrylate, methacrylic acid, styrene or combinations thereof.

The acid-functional acrylic material may be formed from monomers comprising methyl acrylate, butyl methacrylate, methacrylic acid, acrylic acid or combinations thereof.

The acid-functional acrylic material may be substantially free, may be essentially free or may be completely free of monomers comprising an epoxy group. By substantially free in relation to monomers comprising an epoxy group, is meant that the acid-functional acrylic material is formed from monomers which comprise less than 5 wt% of monomers comprising an epoxy group based on the total weight of the monomers from which the acid-functional acrylic material is formed. By essentially free in relation to monomers comprising an epoxy group, is meant that the acid-functional acrylic material is formed from monomers which comprise less than 1 wt% of monomers comprising an epoxy group based on the total weight of the monomers from which the acid-functional acrylic material is formed. By completely free in relation to monomers comprising an epoxy group, is meant that the acid-functional acrylic material is formed from monomers which comprise less than 0.01 wt% of monomers comprising an epoxy group based on the total weight of the monomers from which the acid-functional acrylic material is formed. The acid-functional acrylic material may be formed from monomers which comprise no, i.e. 0 wt%, monomers comprising an epoxy group based on the total weight of the monomers from which the acid-functional acrylic material is formed.

The acid-functional acrylic material may be completely free of monomers comprising an epoxy group.

The acid-functional acrylic material may be substantially free, may be essentially free or may be completely free of glycidyl methacrylate. By substantially free in relation to glycidyl methacrylate, is meant that the acid-functional acrylic material is formed from monomers which comprise less than 5 wt% glycidyl methacrylate based on the total weight of the monomers from which the acid-functional acrylic material is formed. By essentially free in relation to glycidyl methacrylate, is meant that the acid-functional acrylic material is formed from monomers which comprise less than 1 wt% glycidyl methacrylate based on the total weight of the monomers from which the acid-functional acrylic material is formed. By completely free in relation to glycidyl methacrylate, is meant that the acid-functional acrylic material is formed from monomers which comprise less than 0.01 wt% glycidyl methacrylate based on the total weight of the monomers from which the acid-functional acrylic material is formed. The acid-functional acrylic material may be formed from monomers which comprise no, i.e. 0 wt%, glycidyl methacrylate based on the total weight of the monomers from which the acid-functional acrylic material is formed.

The acid-functional acrylic material may be completely free of glycidyl methacrylate.

The acid-functional acrylic material may be substantially free, may be essentially free or may be completely free of styrene. By substantially free in relation to styrene, is meant that the acid-functional acrylic material is formed from monomers which comprise less than 5 wt% of styrene based on the total weight of the monomers from which the acid-functional acrylic material is formed. By essentially free in relation to styrene, is meant that the acid-functional acrylic material is formed from monomers which comprise less than 1 wt% of styrene based on the total weight of the monomers from which the acid-functional acrylic material is formed. By completely free in relation to styrene, is meant that the acid-functional acrylic material is formed from monomers which comprise less than 0.01 wt% of styrene based on the total weight of the monomers from which the acid-functional acrylic material is formed. The acid-functional acrylic material may be formed from monomers which comprise no, i.e. 0 wt%, styrene based on the total weight of the monomers from which the acid-functional acrylic material is formed.

The acid-functional acrylic material may be completely free of styrene.

The acid-functional acrylic material may be formed from any suitable method. The acid-functional acrylic material may be formed by solution polymerisation or emulsion polymerisation. The acid-functional acrylic material may be formed by solution polymerisation.

The acid-functional acrylic material may be formed by solution polymerisation. Suitable solution polymerisation methods will be well known to a person skilled in the art. The solution polymerisation method may comprise a plurality of components, which may be referred to as a solution polymerisation reaction mixture.

The solution polymerisation reaction mixture may comprise a solution polymerisation monomer component. The solution polymerisation monomer component may comprise one or more acrylic monomer(s) as described above. The solution polymerisation monomer component may optionally comprise additional ethylenically unsaturated monomers as described above.

The solution polymerisation reaction mixture may further comprise an initiator. The initiator may be a free radical initiator. Suitable initiators include, but are not limited to, tertiary butyl perbenzoate; tert butyl peroxy 3,5,5 trimethylhexanoate; tertiary butyl peroxy 2-ethyl hexanoate; di tertiary butyl peroxide; tertiary butyl peracetate; tertiary butyl peroctoate; azo type initiators such as, for example, 2,2'- azobis(isobutyronitrile), 2,2'-Azobis(2-methylbutyronitrile), 2,2'-Azobis(2.4-dimethyl valeronitrile) and 2,2'-Azobis(4-methoxy-2.4-dimethyl valeronitrile); persulphate initiators such as, for example, ammonium persulphate, sodium persulphate or potassium persulphate; and combinations thereof. The initiator may be soluble in the solution polymerisation reaction mixture. The initiator may be soluble in the monomer mixture.

The initiator may comprise tertiary butyl peroctoate, tertiary butyl perbenzoate or combinations thereof.

The solution polymerisation reaction mixture may comprise a solvent or mixture of solvents. Suitable solvents will be well known to a person skilled in the art. Examples of suitable solvents include, but are not limited to, alcohols such as, for example, n-butanol, pentanol or hexanol; glycols such as, for example, butyl glycol; glycol ethers such as, for example, 2-butoxy ethanol, 1-methoxy propan-2-ol or dipropylene glycol mono methyl ether; and combinations thereof. The solvent may comprise a mixture of solvents. It will be appreciated by a person skilled in the art that the solvent or mixture of solvents is typically chosen such that the monomer mixture is substantially soluble in said solvent or mixture of solvents.

The solution polymerisation monomer component is caused to undergo polymerisation in the solvent or mixture of solvents. The solution polymerisation of the solution polymerisation monomer component is typically carried out as a free radical initiated solution polymerisation in a solvent or mixture of solvents.

Solution polymerisation is typically carried out in a suitable reaction vessel. The solution polymerisation monomer component, initiator and/or solvent or mixture of solvents may be added to the reaction vessel in any suitable order. For example, the solvent or mixture of solvents may be added to the reaction vessel before the solution polymerisation monomer component and/or initiator are added to the reaction vessel. The solution polymerisation monomer component and initiator may be added to the reaction vessel at the same time. The solution polymerisation monomer component and/or initiator may be added to the reaction vessel over any suitable period of time.

Solution polymerisation may be carried out at any suitable temperature. Solution polymerisation may be carried out at an elevated temperature. Solution polymerisation may be carried out at a temperature from 80°C to 200°C, such as from 100 to 180°C, such as from 120 to 160°C, such as from 130 to 150°C or even from 135 to 140°C. Solution polymerisation may be carried out at reflux.

The acid-functional acrylic material may be formed by emulsion polymerisation. Suitable emulsion polymerisation methods will be well known to a person skilled in the art. The emulsion polymerisation method suitably comprises a plurality of components, which may be referred to as an emulsion polymerisation reaction mixture.

The emulsion polymerisation reaction mixture may comprise an emulsion polymerisation monomer component. The emulsion polymerisation monomer component may comprise one or more acrylic monomer(s) as described above. The emulsion polymerisation monomer component may optionally comprise additional ethylenically unsaturated monomers as described above.

The emulsion polymerisation reaction mixture may further comprise an initiator. Suitable initiators are as described above in relation to solution polymerisation.

The emulsion polymerisation reaction mixture may comprise water.

The monomer component of the emulsion polymerisation reaction mixture is caused to undergo polymerisation in the water. The polymerisation of the monomer component of the emulsion polymerisation reaction mixture is typically carried out as a free radical initiated emulsion polymerisation in water. The monomer component of the emulsion polymerisation reaction mixture may form an oil phase in the water.

The emulsion polymerisation reaction mixture may comprise a buffer. Suitable buffers will be well known to a person skilled in the art. The buffer may be operable to act as a hydrogen ion acceptor. Examples of suitable buffers include, but are not limited to, sodium bicarbonate.

The emulsion polymerisation reaction mixture may comprise a surfactant. The surfactant may be an anionic, cationic or non-ionic type stabilizer. Suitable examples of anionic surfactants include, but are not limited to, alkyl sulphates such as, for example, sodium dodecyl sulphate or sodium polyoxy ethylene alkyl ether sulphate; aryl sulphonates such as, for example, sodium dodecylbenzene sulphonate; sulphosuccinates such as, for example, sodium diisobutyl sulpho succinate, sodium dioctyl sulpho succinate and sodium di cyclohexyl sulpho succinate; and combinations thereof. Suitable examples of nonionic emulsifiers include, but are not limited to, fatty alcohol ethoxylates such as, for example polyethylene glycol mono lauryl ether; fatty acid ethoxylates such as, for example, polyethylene glycol mono stearate or polyethylene glycol mono laurate; polyether block polymers such as, for example, polyethylene glycol/polypropylene glycol block polymers also known as pluronics, typical commercial products of this type include Tergitol XJ, XH or XD commercially available from Dow Chemical; and combinations thereof. Suitable examples of cationic emulsifiers include, but are not limited to, amine salts such as, for example, cetyl trimethyl ammonium chloride or benzyl dodecyl dimethyl ammonium bromide; and combinations thereof. It will be appreciated by a person skilled in the art that mixtures of anionic and cationic emulsifiers would typically not be desirable.

The surfactant may be polymeric. The surfactant may be polymerisable with the emulsion polymerised acid-functional acrylic material. For example, the surfactant may be polymerisable with the monomers that form the emulsion polymerised acid-functional acrylic material.

However, the emulsion polymerisation reaction mixture may be substantially free, may be essentially free or may be completely free of surfactant. By substantially free in relation to surfactants, is meant that the emulsion polymerisation reaction mixture comprises less than 5 wt% of surfactant based on the total weight of the emulsion polymerisation reaction mixture. By essentially free in relation to surfactants, is meant that the emulsion polymerisation reaction mixture comprises less than 1 wt% of surfactant based on the total weight of the emulsion polymerisation reaction mixture. By completely free in relation to surfactants, is meant that the emulsion polymerisation reaction mixture comprises less than 0.01 wt% of surfactant based on the total weight of the emulsion polymerisation reaction mixture. The emulsion polymerisation reaction mixture may comprise no, i.e. 0 wt%, surfactant.

Emulsion polymerisation is typically carried out in a suitable reaction vessel. The emulsion polymerisation monomer component, initiator and/or water of the emulsion polymerisation reaction mixture may be added to the reaction vessel in any suitable order. For example, the water may be added to the reaction vessel before the emulsion polymerisation monomer component and/or initiator are added to the reaction vessel. The initiator may be added to the reaction vessel before the emulsion polymerisation monomer component. The emulsion polymerisation monomer component and/or initiator may be added to the reaction vessel over any suitable period of time.

Emulsion polymerisation may be carried out at any suitable temperature. Emulsion polymerisation may be carried out at a temperature from 20°C to 150°C, such as from 40 to 120°C, such as from 50 to 100°C, such as from 60 to 95°C, such as from 70 to 90°C, or even at 80°C. The temperature is typically held constant throughout the emulsion polymerisation process.

The emulsion polymerised acid-functional acrylic material may be in a core/shell arrangement.

The shell may be formed from a plurality of components, which may be referred to as a shell mixture. The shell mixture suitably comprises one or more acrylic monomer(s) as described above. The emulsion polymerisation reaction mixture may optionally comprise additional ethylenically unsaturated monomers as described above.

The shell mixture may further comprise one or more initiator(s). Suitable initiators are as described above in relation to solution polymerisation.

The shell mixture is typically caused to undergo polymerisation to form a shell polymer. The polymerisation of the shell mixture is typically carried out as a free radical initiated solution polymerisation in a solvent or mixture of solvents. The solvents which may be used in this process include, but are not limited to, alcohols such as n- butanol, pentanol or hexanol; or glycol ethers such as 2-butoxy ethanol, 1-methoxy propan-2-ol or dipropylene glycol mono methyl ether. Polymerisation may be carried out at an elevated temperature. The polymerisation may be carried out in the range 80°C to 150°C. The polymerisation can be effectively carried out by adding the shell mixture, over a set time period, to the solvent mixture. The shell mixture may be caused to undergo polymerisation to form a shell polymer prior to contact with components of the core mixture.

Where the shell mixture comprises one or more $\alpha,\beta$-ethylenically unsaturated carboxylic acid, the shell polymer

will have pendant carboxylic acid functional groups. This may be referred to a carboxylic acid functional shell polymer.

The carboxylic acid functional shell polymer may be contacted with a base to form a water dispersible salt. The carboxylic acid functionality in the carboxylic acid functional shell polymer may be at least partly neutralised with the base. Typically at least 10% of the available carboxylic acid groups are neutralised. Substantially all of the available carboxylic acid groups may be neutralised by the base. The base used for this neutralisation may comprise an amine functional material, or a mixture of amine functional materials. Examples of suitable amine functional materials include ammonia, triethylamine, diethylamine, trimethylamine and morphline or hydroxy amine materials such as ethanol amine, N-methyl ethanol amine and N,N di methyl ethanolamine.

The shell polymer may be dispersed in aqueous medium. In this manner, an aqueous dispersion or solution of the shell polymer may be formed.

The shell mixture may be caused to undergo polymerisation to form a shell polymer by emulsion polymerisation in an aqueous medium, thereby forming an aqueous dispersion or solution of the shell polymer.

The core may be formed from plurality of components, which may be referred to as a core mixture. The core mixture may comprise one or more acrylic monomer(s) as described above. The emulsion polymerisation reaction mixture may optionally comprise additional ethylenically unsaturated monomers as described above.

The polymer formed from the shell mixture, such as an aqueous dispersion thereof, may serve as a dispersant for a subsequent polymerisation, which may be a polymerisation of an $\alpha,\beta$-ethylenically unsaturated monomer mixture, such as the core mixture.

The core mixture may further comprise one or more one or more initiator(s). Suitable initiators are as described above in relation to the solution polymerised acrylic material.

The core mixture may be caused to undergo polymerisation at a temperature in the range from 30°C to 99°C, such as in the range from 50°C to 95°C, such as in the range from 80°C to 90°C. Polymerisation of the core mixture may occur in the presence of the polymer formed by polymerisation of the shell mixture to thereby form a core/shell polymer, typically by emulsion polymerisation. A typical polymerisation may be carried out by adding the core mixture, at a controlled rate over a period of time, to an aqueous dispersion of shell polymer. During the polymerisation the mixture may be mixed, such as by stirring and the temperature may be held generally constant.

Other methods to polymerise the core mixture include, but are not limited to, mixing all or part of the core ethylenically unsaturated substances with the aqueous dispersion of shell polymer and then adding the remaining core components, including initiator, to the resulting mixture over a set period of time. Suitable temperatures for this type of process are typically in the range 50°C to 95°C.

For the core/shell composition the ratio of the core mixture (monomers and initiator) to shell mixture (monomers and initiator) may be from 20:80 to 90:10 by weight, such as from 60:40 to 80:20 by weight, or even from 70:30 to 75:25 by weight.

The acid-functional acrylic material may have any suitable number-average molecular weight (Mn). The acid-functional acrylic material may have an Mn from 500 to 250,000 Daltons (Da = g/mole), such as from 1,000 to 200,000 Da, such as from 1,000 to 100,000 Da, such as from 1,500 to 50,000 Da, such as from 2,000 to 25,000 Da, or even from 2,500 to 20,000 Da.

The acid-functional acrylic material may have an Mn of at least 500 Da, such as at least 1,000 Da, such as at least 1,500 Da, such as at least 2,000 Da, or even at least 2,500 Da. The acid-functional acrylic material may have an Mn of up to 250,000 Da, such as up to 200,000 Da, such as up to 150,000 Da, such as up to 100,000 Da, such as up to 50,000 Da, such as up to 25,000 Da, or even up to 20,000 Da. The acid-functional acrylic material may have an Mn from 500 to 250,000 Da, such as from 500 to 200,000 Da, such as from 500 to 150,000 Da, such as from 500 to 100,000 Da, such as from 500 to 50,000 Da, such as from 500 to 25,000 Da, or even from 500 to 20,000 Da. The acid-functional acrylic material may have an Mn from 1,000 to 250,000 Da, such as from 1,000 to 200,000 Da, such as from 1,000 to 150,000 Da, such as from 1,000 to 100,000 Da, such as from 1,000 to 50,000 Da, such as from 1,000 to 25,000 Da, or even from 1,000 to 20,000 Da. The acid-functional acrylic material may have an Mn from 1,500 to 250,000 Da, such as from 1,500 to 200,000 Da, such as from 1,500 to 150,000 Da, such as from 1,500 to 100,000 Da, such as from 1,500 to 50,000 Da, such as from 1,500 to 25,000 Da, or even from 1,500 to 20,000 Da. The acid-functional acrylic material may have an Mn from 2,000 to 250,000 Da, such as from 2,000 to 200,000 Da, such as from 2,000 to 150,000 Da, such as from 2,000 to 100,000 Da, such as from 2,000 to 50,000 Da, such as from 2,000 to 25,000 Da, or even from 2,000 to 20,000 Da. The acid-functional acrylic material may have an Mn from 2,500 to 250,000 Da, such as from 2,500 to 200,000 Da, such as from 2,500 to 150,000 Da, such as from 2,500 to 100,000 Da, such as from 2,500 to 50,000 Da, such as from 2,500 to 25,000 Da, or even from 2,500 to 20,000 Da.

The acid-functional acrylic material may have an Mn from 2,000 to 20,000 Da.

A person skilled in the art will appreciate that methods to measure the Mn of the first polyester material, as defined above, may also be applied to measure the Mn of the acid-functional acrylic material.

The acid-functional acrylic material may have any suitable weight-average molecular weight (Mw). The acid-functional acrylic material may have an Mw of from 500 to 500,000 Daltons (Da = g/mole), such as from 1,000 to 250,000

Da, such as from 2,000 to 200,000 Da, such as from 2,500 to 150,000 Da, such as from 5,000 to 100,000 Da, such as from 6,000 to 75,000 Da, or even from 7,000 to 50,000 Da.

The acid-functional acrylic material may have an Mw of at least 500 Da, such as at least 1,000 Da, such as at least 1,500 Da, such as at least 2,000 Da, such as at least 2,500 Da, such as at least 5,000 Da, such as at least 6,000 Da, or even at least 7,000 Da. The acid-functional acrylic material may have an Mw of up to 500,000 Da, such as up to 250,000 Da, such as up to 200,000 Da, such as up to 150,000 Da, such as up to 100,000 Da, such as up to 75,000 Da, or even up to 50,000 Da. The acid-functional acrylic material may have an Mw from 500 to 500,000 Da, such as from 500 to 250,000 Da, such as from 500 to 200,000 Da, such as from 500 to 150,000 Da, such as from 500 to 100,000 Da, such as from 500 to 75,000 Da, or even from 500 to 50,000 Da. The acid-functional acrylic material may have an Mw from 1,000 to 500,000 Da, such as from 1,000 to 250,000 Da, such as from 1,000 to 200,000 Da, such as from 1,000 to 150,000 Da, such as from 1,000 to 100,000 Da, such as from 1,000 to 75,000 Da, or even from 1,000 to 50,000 Da. The acid-functional acrylic material may have an Mw from 1,500 to 500,000 Da, such as from 1,500 to 250,000 Da, such as from 1,500 to 200,000 Da, such as from 1,500 to 150,000 Da, such as from 1,500 to 100,000 Da, such as from 1,500 to 75,000 Da, or even from 1,500 to 50,000 Da. The acid-functional acrylic material may have an Mw from 2,000 to 500,000 Da, such as from 2,000 to 250,000 Da, such as from 2,000 to 200,000 Da, such as from 2,000 to 150,000 Da, such as from 2,000 to 100,000 Da, such as from 2,000 to 75,000 Da, or even from 2,000 to 50,000 Da. The acid-functional acrylic material may have an Mw from 2,500 to 500,000 Da, such as from 2,500 to 250,000 Da, such as from 2,500 to 200,000 Da, such as from 2,500 to 150,000 Da, such as from 2,500 to 100,000 Da, such as from 2,500 to 75,000 Da, or even from 2,500 to 50,000 Da. The acid-functional acrylic material may have an Mw from 5,000 to 500,000 Da, such as from 5,000 to 250,000 Da, such as from 5,000 to 200,000 Da, such as from 5,000 to 150,000 Da, such as from 5,000 to 100,000 Da, such as from 5,000 to 75,000 Da, or even from 5,000 to 50,000 Da. The acid-functional acrylic material may have an Mw from 6,000 to 500,000 Da, such as from 6,000 to 250,000 Da, such as from 6,000 to 200,000 Da, such as from 6,000 to 150,000 Da, such as from 6,000 to 100,000 Da, such as from 6,000 to 75,000 Da, or even from 6,000 to 50,000 Da. The acid-functional acrylic material may have an Mw from 7,000 to 500,000 Da, such as from 7,000 to 250,000 Da, such as from 7,000 to 200,000 Da, such as from 7,000 to 150,000 Da, such as from 7,000 to 100,000 Da, such as from 7,000 to 75,000 Da, or even from 7,000 to 50,000 Da.

The acid-functional acrylic material may have an Mw from 7,000 to 50,000 Da.

A person skilled in the art will appreciate that methods to measure the Mn of the first polyester material, as defined above, may also be applied to measure the Mn of the acid-functional acrylic material.

The acid-functional acrylic material may have any suitable glass transition temperature (Tg). The acid-functional acrylic material may have a Tg from -50 to 250°C, such as from -25 to 200°C, such as from 0 to 150°C, such as from 5 to 125°C, such as from 10 to 100°C, or even from 15 to 80°C.

The acid-functional acrylic material may have a Tg of at least -50°C, such as at least -25°C, such as at least 0°C, such as at least 5°C, such as at least 10°C, or even at least 15°C. The acid-functional acrylic material may have a Tg of up to 250°C, such as up to 200°C, such as up to 150°C, such as up to 125°C, such as up to 100°C, or even up to 75°C. The acid-functional acrylic material may have a Tg from -50 to 250°C, such as from -25 to 250°C, such as from 0 to 250°C, such as from 5 to 250°C, such as from 10 to 250°C, or even from 15 to 250°C. The acid-functional acrylic material may have a Tg from -50 to 200°C, such as from -25 to 200°C, such as from 0 to 200°C, such as from 5 to 200°C, such as from 10 to 200°C, or even from 15 to 200°C. The acid-functional acrylic material may have a Tg from -50 to 150°C, such as from -25 to 150°C, such as from 0 to 150°C, such as from 5 to 150°C, such as from 10 to 150°C, or even from 15 to 150°C. The acid-functional acrylic material may have a Tg from -50 to 125°C, such as from -25 to 125°C, such as from 0 to 125°C, such as from 5 to 125°C, such as from 10 to 125°C, or even from 15 to 125°C. The acid-functional acrylic material may have a Tg from -50 to 100°C, such as from -25 to 100°C, such as from 0 to 100°C, such as from 5 to 100°C, such as from 10 to 100°C, or even from 15 to 100°C. The acid-functional acrylic material may have a Tg from -50 to 75°C, such as from -25 to 75°C, such as from 0 to 75°C, such as from 5 to 75°C, such as from 10 to 75°C, or even from 15 to 75°C.

A person skilled in the art will appreciate that methods to measure the Tg of the first polyester material, as defined above, may also be applied to measure the Tg of the acid-functional acrylic material.

The coating composition may further comprise a crosslinking material. Suitable crosslinking materials will be well known to the person skilled in the art.

The crosslinking material may be a single molecule, a dimer, an oligomer, a (co)polymer or a mixture thereof. The crosslinking material may be a dimer or trimer.

Suitable crosslinking materials include, but are not limited to: phenolic resins (or phenol-formaldehyde resins); aminoplast resins (or triazine-formaldehyde resins); amino resins, such as benzoguanamine resins and/or benzoguanamine-formaldehyde resins; epoxy resins; epoxy-mimic resins, such as those based on bisphenols and other bisphenol A (BPA) replacements; isocyanate resins; isocyanurate resins, such as triglycidylisocyanurate; hydroxy (alkyl) amide resins, such as β-hydroxy (alkyl) amide resins; hydroxy(alkyl) urea resins; carbodiimide resins; oxazolines; alkylated carbamate resins; polyacids; anhydrides; organometallic acid-functional materials; polyamines; and/or polyamides and

combinations thereof.

Suitable examples of phenolic resins are those formed from the reaction of a phenol with an aldehyde or a ketone, such as from the reaction of a phenol with an aldehyde, such as from the reaction of a phenol with formaldehyde or acetaldehyde, or even from the reaction of a phenol with formaldehyde. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997. The phenolic resins may be of the resol type. By "resol type" we mean resins formed in the presence of a basic (alkaline) catalyst and optionally an excess of formaldehyde. Suitable examples of commercially available phenolic resins include, but are not limited to those sold under the trade name PHENODUR (RTM) commercially available from Allnex, such as PHENODUR EK-827, PHENODUR VPR1785, PHENODUR PR 515, PHENODUR PR516, PHENODUR PR 517, PHENODUR PR 285, PHENODUR PR612 or PHENODUR PH2024; resins sold under the trade name BAKELITE (RTM) commercially available from Sumitomo Bakelite co., ltd., such as BAKELITE 6582 LB, BAKELITE 6535, BAKELITE PF9989 or BAKELITE PF6581; SFC 112 commercially available from SI Group; DUREZ (RTM) 33356 commercially available from SHHPP; ARALINK (RTM) 40-852 commercially available from Bitrez; or combinations thereof.

Suitable examples of isocyanate resins include, but are not limited to the following: isophorone diisocyanate (IPDI), such as those sold under the trade name DESMODUR (RTM) commercially available from Cevstro, for example DESMODUR VP-LS 2078/2 or DESMODUR PL 340 or those sold under the trade name VESTANAT (RTM) commercially available from Evonik, for example VESTANANT B 1370, VESTANAT B 118 6A or VESTANAT B 1358 A; blocked aliphatic polyisocyanate based on hexamethylene diisocyanate (HDI), such as those sold under the trade name DESMODUR (RTM) commercially available from Covestro, for example DESMODUR BL3370 or DESMODUR BL 3175 SN, those sold under the trade name DURANATE (RTM) commercially available from Asahi KASEI, for example DURANATE MF-K60X, those sold under the trade name TOLONATE (RTM) commercially available from Vencorex Chemicals, for example TOLONATE D2 or those sold under the trade name TRIXENE (RTM) commercially available from Baxenden, for example TRIXENE-BI-7984 or TRIXENE 7981; or combinations thereof.

The crosslinking material may contain nitrogen. The crosslinking material may be in the form of an amine or amide material. The crosslinking material may comprise a hydroxyl substituted amine or amide material.

The crosslinking material may comprise a hydroxyalkylamide material, such as a β-hydroxyalkylamide material.

The crosslinking material may contain a terminal chemical group as shown in Formula I.

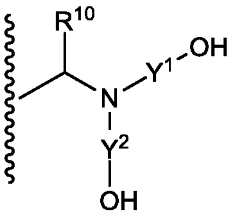

Formula I

wherein $R^{10}$ represents an electron withdrawing group, such as (=O); and $Y^1$ and $Y^2$ each, independently, represents a $C_1$ to $C_3$ alkylene group.

The terminal chemical group of Formula I may be connected to a further chemical structure, not shown. Additionally or alternatively, the chemical group of formula I may be suspended from a carrier substrate, such as a silica carrier substrate, for example.

The crosslinking material may contain a plurality of terminal chemical groups as shown in Formula I. For example, the crosslinking material may contain 2, 3 or 4 terminal chemical groups as shown in Formula I.

The crosslinking material may comprise a moiety according to Formula II:

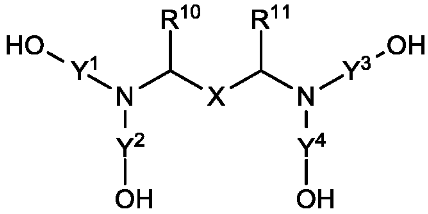

Formula II

wherein $R^{10}$ and $R^{11}$ each, independently, represent an electron withdrawing group, such as (=O);
$Y^1$, $Y^2$, $Y^3$ and $Y^4$ each, independently, represent a $C_1$ to $C_3$ alkylene group; and
X represents a $C_2$ to $C_6$ alkylene group.

Each of $R^{10}$ and $R^{11}$ may represent a (=O) group.
Each of $Y^1$, $Y^2$, $Y^3$ and $Y^4$ may represent an ethylene group.
X may represent a butylene group.
Accordingly, the crosslinking material may comprise a material of formula III:

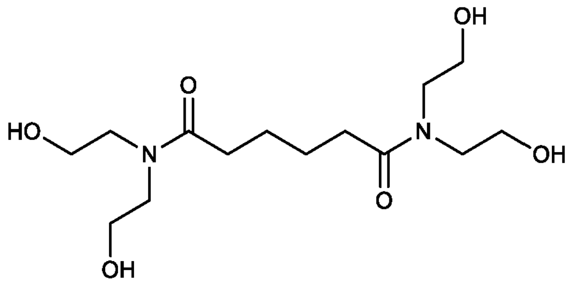

Formula III

The crosslinking material may comprise a commercially available β-hydroxyalkylamide crosslinking, such as, for example, PRIMID XL-552 (available from EMS); PRIMID QM-1260 (available from EMS Chemie); and N,N,N',N'-tetrakis(2-hydroxypropyl)adipamide.
The crosslinking material may be in the form of a urea material. The crosslinking material may comprise a hydroxyl substituted urea material. The crosslinking material may comprise a hydroxy functional alkyl polyurea material.
The hydroxy functional alkyl polyurea material may comprise a material having the formula:

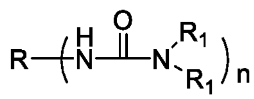

wherein R comprises an isocyanurate moiety, biuret moiety, allophonate moiety, glycoluril moiety, benzoguanamine moiety, polyetheramine moiety, and/or polymeric moiety different from a polyetheramine and having an Mn of 500 or greater; wherein each R1 is independently a hydrogen, alkyl having at least 1 carbon, or a hydroxy functional alkyl having 2 or more carbons and at least one R1 is a hydroxy functional alkyl having 2 or more carbons; and n is 2-6.
The hydroxy functional alkyl polyurea material may comprise a material having the formula:

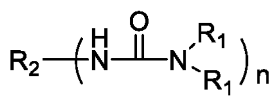

wherein R2 is a substituted or unsubstituted C1 to C36 alkyl group, an aromatic group, an isocyanurate moiety, biuret moiety, allophonate moiety, glycoluril moiety, benzoguanamine moiety, polyetheramine moiety, and/or polymeric moiety different from a polyetheramine and having an Mn of 500 or greater; wherein each R1 is independently a hydrogen, an alkyl having at least 1 carbon, or a hydroxy functional alkyl having 2 or more carbons and at least one R1 is a hydroxyl functional alkyl having 2 or more carbons; and n is 2-6.
Further details of suitable hydroxy functional alkyl polyurea materials are disclosed in PCT patent application WO 2014/123955.
The crosslinking material may comprise a carbodiimide resin. The crosslinker may comprise a polycarbodiimide. The crosslinker may comprise a polycarbodiimide having the following structural units (IV) or (V) including mixtures thereof:

(IV) 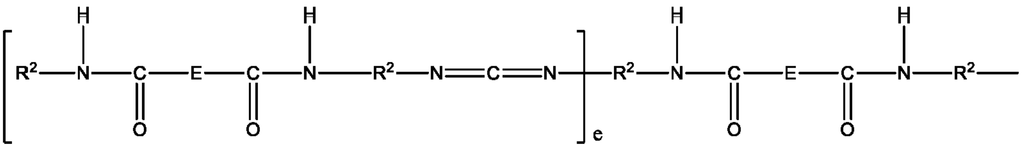

(V) 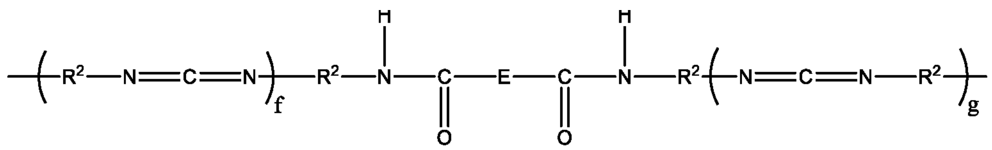

where e is an integer of from 2 to 20; f and g are each at least 1, and f+g is an integer up to 20; E is a radical selected from (VI) -O-$R^3$-O- and

(VII) 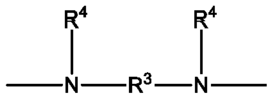

where $R^2$ with reference to structural units (IV) or (V) comprises a cyclic radical and $R^3$ with reference to (VI) or (VII) is a linear hydrocarbon radical containing at least 4 carbon atoms and $R^4$ with reference to (VII) is hydrogen or an alkyl radical.

Further details of suitable carbodiimide resins are disclosed in PCT patent applicationWO2017/122171.

Suitable examples of aminoplast resins include those which are formed by reacting a triazine such as melamine or benzoguanamine with formaldehyde. These condensates may be etherified, typically, with methanol, ethanol, butanol or mixtures thereof. For the chemistry, preparation and use of aminoplast resins, see "The Chemistry and Applications of Amino Crosslinking agents or Aminoplast", Vol. V, Part 11, page 21 ff., edited by Dr. Oldring; John Wiley & Sons/Cita Technology Limited, London, 1998. Suitable examples of commercially available aminoplast resins include, but are not limited to, those sold under the trade name MAPRENAL (registered trade mark), such as MAPRENAL MF980 (commercially available from Ineos); those sold under the trade name CYMEL (registered trade mark), such as CYMEL 303 and CYMEL 1128 (available from Allnex Industries); and combinations thereof.

The crosslinking material may be present in the coating composition in any suitable amount.

The coating composition may comprise any suitable amount of crosslinking material. The coating composition may comprise at least 1 wt%, such as at least 5 wt%, such as at least 10 wt%, such as at least 15 wt%, such as at least 20 wt% of the crosslinking material based on the total solid weight of the coating composition. The coating composition may comprise up to 80 wt%, such as up to 70 wt%, such as up to 60 wt%, such as up to 50 wt%, such as up to 40 wt%, or even up to 30 wt% of the crosslinking material based on the total solid weight of the coating composition.

The coating composition may comprise from 1 to 80 wt%, such as from 5 to 80 wt%, such as from 10 to 80 wt%, such as from 15 to 80 wt%, or even from 20 to 80 wt% of the crosslinking material based on the total solid weight of the coating composition. The coating composition may comprise from 1 to 70 wt%, such as from 5 to 70 wt%, such as from 10 to 70 wt%, such as from 15 to 70 wt%, or even from 20 to 70 wt% of the crosslinking material based on the total solid weight of the coating composition. The coating composition may comprise from 1 to 60 wt%, such as from 5 to 60 wt%, such as from 10 to 60 wt%, such as from 15 to 60 wt%, or even from 20 to 60 wt% of the crosslinking material based on the total solid weight of the coating composition. The coating composition may comprise from 1 to 50 wt%, such as from 5 to 50 wt%, such as from 10 to 50 wt%, such as from 15 to 50 wt%, or even from 20 to 50 wt% of the crosslinking material based on the total solid weight of the coating composition. The coating composition may comprise from 1 to 40 wt%, such as from 5 to 40 wt%, such as from 10 to 40 wt%, such as from 15 to 40 wt%, or even from 20 to 40 wt% of the crosslinking material based on the total solid weight of the coating composition. The coating composition may comprise from 1 to 30 wt%, such as from 5 to 30 wt%, such as from 10 to 30 wt%, such as from 15 to 30 wt%, or even from 20 to 30 wt% of the crosslinking material based on the total solid weight of the coating composition.

The coating composition may comprise from 20 to 30 wt% of the crosslinking material based on the total solid weight of the coating composition.

The coating composition may comprise a crosslinking material comprising a phenolic resin. The coating composition may comprise any suitable amount of phenolic resin. The coating composition may comprise at least 1 wt%, such as at least 2 wt%, such as at least 3 wt%, or even at least 4 wt% of the phenolic resin based on the total solid weight of the coating composition. The coating composition may comprise up to 20 wt%, such as up to 15 wt%, such as up to 10 wt%, or even up to 5 wt% of the phenolic resin based on the total solid weight of the coating composition.

The coating composition may comprise from 1 to 20 wt%, such as from 2 to 20 wt%, such as from 3 to 20 wt%, or even from 4 to 20 wt% of the phenolic resin based on the total solid weight of the coating composition. The coating composition may comprise from 1 to 15 wt%, such as from 2 to 15 wt%, such as from 3 to 15 wt%, or even from 4 to 15 wt% of the phenolic resin based on the total solid weight of the coating composition. The coating composition may comprise from 1 to 10 wt%, such as from 2 to 10 wt%, such as from 3 to 10 wt%, or even from 4 to 10 wt% of the phenolic resin based on the total solid weight of the coating composition. The coating composition may comprise from 1 to 5 wt%, such as from 2 to 5 wt%, such as from 3 to 5 wt%, or even from 4 to 5 wt% of the phenolic resin based on the total solid weight of the coating composition.

The coating composition may comprise up to 5 wt% of the phenolic resin based on the total solid weight of the coating composition.

The coating composition may comprise a crosslinking material comprising a benzoguanamine resin and/or a benzoguanamine-formaldehyde resin. The coating composition may comprise any suitable amount of benzoguanamine resin and/or a benzoguanamine-formaldehyde resin. The coating composition may comprise at least 1 wt%, such as at least 5 wt%, such as at least 10 wt%, or even at least 15 wt% of the benzoguanamine resin and/or a benzoguanamine-formaldehyde resin based on the total solid weight of the coating composition. The coating composition may comprise up to 80 wt%, such as up to 70 wt%, such as up to 60 wt%, such as up to 50 wt%, such as up to 40 wt%, such as up to 30 wt%, or even up to 25 wt% of the benzoguanamine resin and/or a benzoguanamine-formaldehyde resin based on the total solid weight of the coating composition. The coating composition may comprise from 1 to 80 wt%, such as from 1 to 70 wt%, such as from 1 to 60 wt%, such as from 1 to 50 wt%, such as from 1 to 40 wt%, such as from 1 to 30 wt%, or even from 1 to 25 wt% of the benzoguanamine resin and/or a benzoguanamine-formaldehyde resin based on the total solid weight of the coating composition. The coating composition may comprise from 5 to 80 wt%, such as from 5 to 70 wt%, such as from 5 to 60 wt%, such as from 5 to 50 wt%, such as from 5 to 40 wt%, such as from 5 to 30 wt%, or even from 5 to 25 wt% of the benzoguanamine resin and/or a benzoguanamine-formaldehyde resin based on the total solid weight of the coating composition. The coating composition may comprise from 10 to 80 wt%, such as from 10 to 70 wt%, such as from 10 to 60 wt%, such as from 10 to 50 wt%, such as from 10 to 40 wt%, such as from 10 to 30 wt%, or even from 10 to 25 wt% of the benzoguanamine resin and/or a benzoguanamine-formaldehyde resin based on the total solid weight of the coating composition. The coating composition may comprise from 15 to 80 wt%, such as from 15 to 70 wt%, such as from 15 to 60 wt%, such as from 15 to 50 wt%, such as from 15 to 40 wt%, such as from 15 to 30 wt%, or even from 15 to 25 wt% of the benzoguanamine resin and/or a benzoguanamine-formaldehyde resin based on the total solid weight of the coating composition.

The coating composition may further comprise a solvent. The coating composition may comprise a single solvent or a mixture of solvents. The solvent may comprise water, an organic solvent, a mixture of water and an organic solvent or a mixture of organic solvents. The coating composition may comprise an organic solvent or a mixture of organic solvents.

The organic solvent suitably has sufficient volatility to essentially entirely evaporate from the coating composition during the curing process. As a non-limiting example, the curing process may be by heating at 130-230 °C for 1-15 minutes.

Suitable organic solvents include, but are not limited to the following: aliphatic hydrocarbons such as mineral spirits and high flash point naphtha; aromatic hydrocarbons such as benzene; toluene; xylene; solvent naphtha 100, 150, 200; those available from Exxon-Mobil Chemical Company under the SOLVESSO (RTM) trade name; alcohols such as ethanol; n-propanol; isopropanol; and n-butanol; ketones such as acetone; cyclohexanone; methylisobutyl ketone; methyl ethyl ketone; esters such as ethyl acetate; butyl acetate; n-hexyl acetate; RHODIASOLV (RTM) RPDE (a blend of succinic and adipic esters commercially available from Rhodia); glycols such as butyl glycol; glycol ethers such as methoxypropanol; ethylene glycol monomethyl ether; ethylene glycol monobutyl ether and combinations thereof.

The coating composition may comprise any suitable amount of solvent, when present. The coating composition may comprise from 1 to 90 wt%, such as from 5 to 95 wt%, such as from 10 to 90 wt%, such as from 20 to 80 wt%, or even from 20 to 50 wt% based on the total weight of the coating composition.

The first polyester material, second polyester material and/or acid-functional acrylic material may be dissolved or dispersed in the said solvent during and/or after its formation.

The coating composition may further comprise a catalyst. Suitable catalysts will be well known to the person skilled in the art. The catalyst may be a non-metal, a metal catalyst or a combination thereof. Suitable non-metal catalysts include, but are not limited to the following: phosphoric acid; blocked phosphoric acid; phosphatised resins such as, for example, phosphatised epoxy resins and phosphatised acrylic resins; CYCAT (RTM) XK 406 N (commercially available from Allnex); sulfuric acid; sulfonic acid; CYCAT 600 (commercially available from Allnex); NACURE (RTM) 5076 or NACURE 5925 (commercially available from King industries); acid phosphate catalyst such as NACURE XC 235 (commercially available from King Industries); and combinations thereof. Suitable metal catalysts will be well known to the person skilled in the art. Suitable metal catalysts include, but are not limited to the following: tin containing catalysts, such as monobutyl tin tris (2-ethylhexanoate); zirconium containing catalysts, such as KKAT (RTM) 4205 (commercially available from King Industries); titanate based catalysts, such as tetrabutyl titanate TnBT (commercially available from

Sigma Aldrich); and combinations thereof.

The catalyst, when present, may be used in the coating composition in any suitable amount. The coating composition may comprise from 0.001 to 10 wt%, such as from 0.001 to 5 wt%, such as from 0.01 to 5 wt%, such as from 0.05 to 3 wt%, such as from 0.1 to 2 wt%, such as from 0.1 to 1 wt%, or even from 0.1 to 0.5 wt% of the catalyst, when present, based on the total solid weight of the coating composition.

The coating compositions of the present invention may comprise a further resin material. Suitable further resin materials will be well known to a person skilled in the art. Examples of further resin materials include, but are not limited to the following: polyester resins; acrylic resins; polyvinyl chloride (PVC) resins; alkyd resins; polyurethane resins; polysiloxane resins; epoxy resins or combinations thereof.

The coating composition may comprise other optional materials well known in the art of formulating coatings, such as colorants, plasticizers, abrasion-resistant particles, anti-oxidants, hindered amine light stabilizers, UV light absorbers and stabilizers, surfactants, flow control agents, thixotropic agents, fillers, organic co-solvents, reactive diluents, catalysts, grind vehicles, lubricants, waxes and other customary auxiliaries.

As used herein, the term "colorant" means any substance that imparts colour and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention. Suitable colorants are listed in U.S. Patent No. 8,614,286, column 7, line 2 through column 8, line 65. Particularly suitable for packaging coatings are those approved for food contact, such as titanium dioxide; iron oxides, such as black iron oxide; aluminium paste; aluminium powder such as aluminium flake; carbon black; ultramarine blue; phthalocyanines, such as phthalocyanine blue and phthalocyanine green; chromium oxides, such as chromium green oxide; graphite fibrils; ferried yellow; quindo red; and combinations thereof, and those listed in Article 178.3297 of the Code of Federal Regulations.

The colorant, when present, may be used in the coating composition in any suitable amount. The coating composition may comprise up to 90 wt%, such as up to 50 wt%, or even up to 10 wt% colorant, when present, based on the total solid weight of the coating composition.

Suitable lubricants will be well known to the person skilled in the art. Suitable examples of lubricants include, but are not limited to the following: carnauba wax and polyethylene type lubricants. The coating composition may comprise at least 0.01 wt% lubricant, when present, based on the total solid weight of the coating composition.

Surfactants may optionally be added to the coating composition in order to aid in flow and wetting of the substrate. Suitable surfactants will be well known to the person skilled in the art. The surfactant, when present, is suitably chosen to be compatible with food and/or beverage container applications. Suitable surfactants include, but are not limited to the following: alkyl sulphates (e.g., sodium lauryl sulphate); ether sulphates; phosphate esters; sulphonates; and their various alkali, ammonium, amine salts; aliphatic alcohol ethoxylates; alkyl phenol ethoxylates (e.g. nonyl phenol polyether); salts and/or combinations thereof. The coating composition may comprise from 0.01 wt% to 10 wt%, such as from 0.01 to 5 wt%, or even from 0.01 to 2 wt% surfactant, when present, based on the total solid weight of the coating composition.

The coating compositions of the present invention may be substantially free, may be essentially free or may be completely free of bisphenol A (BPA) and derivatives thereof. Derivatives of bisphenol A include, for example, bisphenol A diglycidyl ether (BADGE). The coating compositions of the present invention may also be substantially free, may be essentially free or may be completely free of bisphenol F (BPF) and derivatives thereof. Derivatives of bisphenol F include, for example, bisphenol F diglycidyl ether (BPFG). The compounds or derivatives thereof mentioned above may not be added to the composition intentionally but may be present in trace amounts because of unavoidable contamination from the environment. "Substantially free" refers to coating compositions, or components thereof, containing less than 1000 parts per million (ppm) of any of the compounds or derivatives thereof mentioned above. "Essentially free" refers to coating compositions, or components thereof, containing less than 100 ppm of any of the compounds or derivatives thereof mentioned above. By "Completely free" refers to coating compositions, or components thereof, containing less than 20 parts per billion (ppb) of any of the compounds or derivatives thereof mentioned above.

The coating compositions of the present invention may be substantially free, may be essentially free or may be completely free of dialkyltin compounds, including oxides or other derivatives thereof. Examples of dialkyltin compounds include, but are not limited to the following: dibutyltindilaurate (DBTDL); dioctyltindilaurate; dimethyltin oxide; diethyltin oxide; dipropyltin oxide; dibutyltin oxide (DBTO); dioctyltinoxide (DOTO) or combinations thereof. By "substantially free" we mean to refer to coating compositions containing less than 1000 parts per million (ppm) of any of the compounds or derivatives thereof mentioned above. By "essentially free" we mean to refer to coating compositions containing less than 100 ppm of any of the compounds or derivatives thereof mentioned above. By "completely free" we mean to refer to coating compositions containing less than 20 parts per billion (ppb) of any of the compounds or derivatives thereof.

The coating composition may be produced in any suitable manner. For example, the first polyester material, second polyester material, acid-functional acrylic material and further optional ingredients may be added together to a

suitable vessel and mixed. For example, when a crosslinking material is used, the crosslinking material may be pre-blended with the acid-functional acrylic material before being mixed with the first polyester material, second polyester material and further optional ingredients in a second step. By "pre-blending", like terms as used herein, is meant that the crosslinking material and acid-functional acrylic material are mixed together first before the mixture of crosslinking material and acid-functional acrylic material are mixed with the remaining ingredients.

The coating composition may be applied to any suitable substrate. The substrate may be formed of metal, plastic, composite and/or wood. The substrate may be a metal substrate.

The substrate may be an article such as an automotive product, a household or office appliance, furniture item or tool, a powered industrial product, a consumer electronics article, an architectural product or a product protected by an intumescent coating.

Examples of suitable metal substrates include, but are not limited to, food and/or beverage packaging, components used to fabricate such packaging or monobloc aerosol cans and/or tubes.

The food and/or beverage packaging may be a can. Examples of cans include, but are not limited to, two-piece cans, three-piece cans and the like. Suitable examples of monobloc aerosol cans and/or tubes include, but are not limited to, deodorant and hair spray containers. Monobloc aerosol cans and/or tubes may be aluminium monobloc aerosol cans and/or tubes.

The substrate may be a food and/or beverage packaging or component used to fabricate such packaging.

The application of various pre-treatments and coatings to packaging is well established. Such treatments and/or coatings, for example, can be used in the case of metal cans, wherein the treatment and/or coating is used to retard or inhibit corrosion, provide a decorative coating, provide ease of handling during the manufacturing process, and the like. Coatings can be applied to the interior of such cans to prevent the contents from contacting the metal of the container. Contact between the metal and a food or beverage, for example, can lead to corrosion of a metal container, which can then contaminate the food or beverage. This is particularly true when the contents of the can are acidic in nature. The coatings applied to the interior of metal cans also help prevent corrosion in the headspace of the cans, which is the area between the fill line of the product and the can lid; corrosion in the headspace is particularly problematic with food products having a high salt content. Coatings can also be applied to the exterior of metal cans.

The coating compositions are particularly applicable for use with coiled metal stock, such as the coiled metal stock from which the ends of cans are made ("can end stock"), and end caps and closures are made ("cap/closure stock"). Since coatings designed for use on can end stock and cap/closure stock are typically applied prior to the piece being cut and stamped out of the coiled metal stock, they are typically flexible and extensible. For example, such stock is typically coated on both sides. Thereafter, the coated metal stock is punched. For can ends, the metal is then scored for the "pop-top" opening and the pop-top ring is then attached with a pin that is separately fabricated. The end is then attached to the can body by an edge rolling process. A similar procedure is done for "easy open" can ends. For easy open can ends, a score substantially around the perimeter of the lid allows for easy opening or removing of the lid from the can, typically by means of a pull tab. For caps and closures, the cap/closure stock is typically coated, such as by roll coating, and the cap or closure stamped out of the stock; it is possible, however, to coat the cap/closure after formation. Coatings for cans subjected to relatively stringent temperature and/or pressure requirements should also be resistant to popping, corrosion, blushing and/or blistering.

The substrate may be a package coated at least in part with any of the coating compositions described herein. A "package" is anything used to contain another item, particularly for shipping from a point of manufacture to a consumer, and for subsequent storage by a consumer. A package will be therefore understood as something that is sealed so as to keep its contents free from deterioration until opened by a consumer. The manufacturer will often identify the length of time during which the food or beverage will be free from spoilage, which typically ranges from several months to years. Thus, the present "package" is distinguished from a storage container or bakeware in which a consumer might make and/or store food; such a container would only maintain the freshness or integrity of the food item for a relatively short period. A package according to the present invention can be made of metal or non-metal, for example, plastic or laminate, and be in any form. An example of a suitable package is a laminate tube. Another example of a suitable package is metal can. The term "metal can" includes any type of metal can, container or any type of receptacle or portion thereof that is sealed by the food and/or beverage manufacturer to minimize or eliminate spoilage of the contents until such package is opened by the consumer. One example of a metal can is a food can; the term "food can(s)" is used herein to refer to cans, containers or any type of receptacle or portion thereof used to hold any type of food and/or beverage. The term "metal can(s)" specifically includes food cans and also specifically includes "can ends" including "E-Z open ends", which are typically stamped from can end stock and used in conjunction with the packaging of food and beverages. The term "metal cans" also specifically includes metal caps and/or closures such as bottle caps, screw top caps and lids of any size, lug caps, and the like. The metal cans can be used to hold other items as well, including, but not limited to, personal care products, bug spray, spray paint, and any other compound suitable for packaging in an aerosol can. The cans can include "two piece cans" and "three-piece cans" as well as drawn and ironed one-piece cans; such one piece cans often find application with aerosol products. Packages coated according to the present invention can also

include plastic bottles, plastic tubes, laminates and flexible packaging, such as those made from PE, PP, PET and the like. Such packaging could hold, for example, food, toothpaste, personal care products and the like.

The coating compositions can be applied to the interior and/or the exterior of the package. The coating compositions could also be applied as a rim coat to the bottom of the can. The rim coat functions to reduce friction for improved handling during the continued fabrication and/or processing of the can. The coating compositions can also be applied to caps and/or closures; such application can include, for example, a protective varnish that is applied before and/or after formation of the cap/closure and/or a pigmented enamel post applied to the cap, particularly those having a scored seam at the bottom of the cap. Decorated can stock can also be partially coated externally with the coating described herein, and the decorated, coated can stock used to form various metal cans.

Metal coils, having wide application in many industries, are also substrates that can be coated according to the present invention. Coil coatings also typically comprise a colorant.

The coating compositions of the present invention may be applied to at least a portion of the substrate. For example, when the coating compositions are applied to a food and/or beverage can, the coating compositions may be applied to at least a portion of an internal and/or external surface of said food and/or beverage can. For example, when the coating compositions are applied to a food and/or beverage can, the coating compositions may be applied to at least a portion of an internal surface of said food and/or beverage can.

The coating composition may be applied as a repair coating for component parts of food and beverage cans. For example, as a repair coating for a full aperture easy open end for food cans. This end component may repair coated, after fabrication, by airless spraying of the material on to the exterior of the score line. Other uses as repair coatings include the coating of seams and welds, such as side seams for which the coating may be applied to the area by spraying (airless or air driven) or roller coating. Repair coating can also include protection of vulnerable areas where corrosion may be likely due to damage, these areas include flanges, rims and bottom rims where the coating may be applied by spraying, roller coating flow or dip coating.

The coating composition may be applied to an easy open can end.

The coating composition may be applied to the substrate by any suitable method. Suitable methods of applying the coating compositions of the present invention will be well known to a person skilled in the art. Suitable application methods for the coating compositions include, but are not limited to the following: electrocoating, such as electrodeposition; spraying; electrostatic spraying; dipping; rolling; brushing; and the like.

The coating composition may be applied to the substrate, or a portion thereof, as a single layer or as part of a multi layer system. The coating compositions may be applied as a single layer. The coating composition may be applied to an uncoated substrate. For the avoidance of doubt an uncoated substrate extends to a surface that is cleaned prior to application. The coating composition may be applied on top of another paint layer as part of a multi layer system. For example, the coating composition may be applied on top of a primer. The coating composition may form an intermediate layer or a top coat layer. The coating composition may be applied as the first coat of a multi coat system. The coating composition may be applied as an undercoat or a primer. The second, third, fourth etc. coats may comprise any suitable paint such as those containing, for example, epoxy resins; polyester resins; polyurethane resins; polysiloxane resins; hydrocarbon resins or combinations thereof. The second, third, fourth etc. coats may comprise polyester resins. The second, third, fourth etc. coats may be a liquid coating or a powder coating.

It will be appreciated by a person skilled in the art that the coating composition may be applied before or after forming the article, such as the packaging. For example, the coating composition may be applied to metal substrate which is then shaped and formed into a metal article, or the coating composition may be applied to the preformed article.

The coating composition may be applied to a substrate once or multiple times.

The coating composition may be applied to any suitable dry film thickness. The coating composition may be applied to a dry film thickness from 1 to 100 microns ($\mu$m), such as from 1 to 75 $\mu$m, such as from 1 to 50 $\mu$m, such as from 1 to 40 $\mu$m, such as from 1 to 20 $\mu$m, or even from 1 to 10 $\mu$m.

The coating composition may be cured by any suitable method. The coating composition may be cured by heat curing, radiation curing, or by chemical curing, such as by heat curing. The coating composition, when heat cured, may be cured at any suitable temperature. The coating composition, when heat cured, may be cured to a peak metal temperature (PMT) of 150 to 350°C, such as from 175 to 320°C, such as from 190 to 300°C, or even from 200 to 280°C. For the avoidance of doubt, the term "peak metal temperature", and like terms as used herein, is meant unless specified otherwise the maximum temperature reached by the metal substrate during exposure to a heat during the heat curing process. In other words, the peak metal temperature (PMT) is the maximum temperature reached by the metal substrate and not the temperature which is applied thereto. It will be appreciated by a person skilled in the art that the temperature reached by the metal substrate may be lower than the temperature which is applied thereto or may be substantially equal to the temperature which is applied thereto. The temperature reached by the metal substrate may be lower that the temperature which is applied thereto.

Curing the coating composition may form a cured film.

Advantageously, the coating compositions of the present invention may reduce or prevent insufficient venting

of a beverage can.

Thus, there is also provided the use of the coating compositions of the present invention in the reduction or prevention of insufficient venting of a beverage can, the beverage can comprising a can body and a can end having a score line on said can end, wherein the coating composition is applied to at least the internal surface of the can end over at least a portion of the score line.

By "sufficient venting" and like terms as used herein is meant, unless specified otherwise, that a sufficient amount of gas, such as carbonated gas, is released substantially immediately upon rupture of the score line to ensure that pressure does not build up within the beverage can. Sufficient gas, such as carbonated gas, is suitably released substantially immediately upon rupturing the score line such that the pressure on the inside of the beverage can is substantially equal to the pressure on the outside of the beverage can. The degree of venting may be measured according to the eversion test as described in the examples section. Eversion occurs where the score line is ruptured, but the internal pressure of the can due to carbonation is not immediately released, causing the opening portion of the can to break open and project out of the can rather than entering the can (or inversion) as is typical when a can is opened. "Insufficient venting" will be understood as the opposite of "sufficient venting" described above.

The can ends have a score line thereon. "Score line" means a line which is partially cut into the can end, such that the line does not extend all the way through the can end, and which defines a portion of the can end to be opened (an opening portion). The score line is suitably of a sufficient depth and width such that it facilitates rupturing around the periphery of the opening portion upon the application of a pushing and/or pulling force to the portion of the can end to be opened. Such score lines will be well known to a person skilled in the art.

For the avoidance of doubt, by the term "rupturing the score line" is meant that the score line of the can end is compromised such that the mechanical seal shears. The mechanical seal is that formed from the metal substrate from which the beverage can end is formed, for example, that formed by the can end having a score line thereon. In contrast, the coating seal is that formed by the cured film derived from the coating composition(s) applied to the internal surface of the can end over at least a portion of the score line. The score line may be ruptured by the application of a pushing and/or pulling force to the portion of the can end to be opened.

A cured film formed from the coating composition may have any suitable Young's modulus. A cured film formed from the coating composition may have a Young's modulus of at least 1.5 gigapascal (GPa), such as at least 2 GPa, such as at least 2.5 GPa, such as at least 3 GPa, such as at least 3.5 GPa, such as at least 4 GPa, such as at least 4.5 GPa, or even at least 5 GPa. The coating composition may have a Young's modulus of up to 10 GPa, such as up to 9.5 GPa, such as up to 9 GPa, such as up to 8.5 GPa, or even up to 8 GPa.

A cured film formed from the coating composition may have a Young's modulus from 1.5 to 10 GPa, such as from 1.5 to 9.5 GPa, such as from 1.5 to 9 GPa, such as from 1.5 to 8.5 GPa, or even from 1.5 to 8 GPa. A cured film formed from the coating composition may have a Young's modulus from 2 to 10 GPa, such as from 2 to 9.5 GPa, such as from 2 to 9 GPa, such as from 2 to 8.5 GPa, or even from 2 to 8 GPa. A cured film formed from the coating composition may have a Young's modulus from 2.5 to 10 GPa, such as from 2.5 to 9.5 GPa, such as from 2.5 to 9 GPa, such as from 2.5 to 8.5 GPa, or even from 2.5 to 8 GPa. A cured film formed from the coating composition may have a Young's modulus from 3 to 10 GPa, such as from 3 to 9.5 GPa, such as from 3 to 9 GPa, such as from 3 to 8.5 GPa, or even from 3 to 8 GPa. A cured film formed from the coating composition may have a Young's modulus from 3.5 to 10 GPa, such as from 3.5 to 9.5 GPa, such as from 3.5 to 9 GPa, such as from 3.5 to 8.5 GPa, or even from 3.5 to 8 GPa. A cured film formed from the coating composition may have a Young's modulus from 4 to 10 GPa, such as from 4 to 9.5 GPa, such as from 4 to 9 GPa, such as from 4 to 8.5 GPa, or even from 4 to 8 GPa. A cured film formed from the coating composition may have a Young's modulus from 4.5 to 10 GPa, such as from 4.5 to 9.5 GPa, such as from 4.5 to 9 GPa, such as from 4.5 to 8.5 GPa, or even from 4.5 to 8 GPa. A cured film formed from the coating composition may have a Young's modulus from 5 to 10 GPa, such as from 5 to 9.5 GPa, such as from 5 to 9 GPa, such as from 5 to 8.5 GPa, or even from 5 to 8 GPa.

A cured film formed from the coating composition may have a Young's modulus of $\geq$3 GPa, such as $\geq$4 GPa or $\geq$5 GPa, such as by wet film.

A cured film formed from the coating composition may have a Young's modulus of at least 3 GPa.

A cured film formed from the coating composition may have a Young's modulus of at least 5 GPa.

The Young's modulus of the cured film as reported herein was measured by Instron analysis: sample dimensions 25.4mm x 5mm dimensions; temperature 24°C; using an Instron 44 unit with a 50N load cell and rate of 5 mm/minute. All values for Young's modulus reported herein were measured in this way. Advantageously, the use of a coating composition having a Young's modulus of at least 3 GPa, or even at least 5 GPa, when cured to form a film, means that the coating composition may have an appropriate tensile strength such that it substantially fully shears in the region of the score line when the beverage can is opened. This may help to facilitate sufficient venting.

A cured film formed from the coating composition may have any suitable flexibility as evidenced by the elongation of the cured coating. A cured film formed from the coating composition may have an elongation of up to 50%, such as up to 45%, such as up to 40%, such as up to 35%, such as up to 30%, such as up to 25%, such as up to 20%, such as

up to 15%, such as up to 10%, or even up to 5%.

A cured film formed from the coating composition may have an elongation from 1 to 50%, such as from 0.5 to 50%, or even from 0 to 50%. A cured film formed from the coating composition may have an elongation from 1 to 45%, such as from 0.5 to 45%, or even from 0 to 45%. A cured film formed from the coating composition may have an elongation from 1 to 40%, such as from 0.5 to 40%, or even from 0 to 40%. A cured film formed from the coating composition may have an elongation from 1 to 35%, such as from 0.5 to 35%, or even from 0 to 35%. A cured film formed from the coating composition may have an elongation from 1 to 30%, such as from 0.5 to 30%, or even from 0 to 30%. A cured film formed from the coating composition may have an elongation from 1 to 25%, such as from 0.5 to 25%, or even from 0 to 25%. A cured film formed from the coating composition may have an elongation from 1 to 20%, such as from 0.5 to 20%, or even from 0 to 20%. A cured film formed from the coating composition may have an elongation from 1 to 15%, such as from 0.5 to 15%, or even from 0 to 15%. A cured film formed from the coating composition may have an elongation from 1 to 10%, such as from 0.5 to 10%, or even from 0 to 10%. A cured film formed from the coating composition may have an elongation from 1 to 5%, such as from 0.5 to 5%, or even from 0 to 5%.

A cured film formed from the coating composition may have an elongation of ≤20%, such as ≤10% or ≤5%, such as by wet film.

A cured film formed from the coating composition may have an elongation of up to 5%.

The elongation as reported herein was measured with an Instron Tester according to ASTM D638-72, with the exception that a rectangular sample is tested rather than one having dog-bone geometry; speed: 5mm/min; sample width: 25.4mm. The sample was taken from a free film. All values for elongation reported herein were measured in this way. Advantageously, the use of a coating composition having an elongation of less than 50%, such as less than 25%, or even from 0 to 5%, when cured to form a film, means that the coating composition has an appropriate flexibility such that it substantially fully shears in the region of the score line when the beverage can is opened. This helps to facilitate sufficient venting.

A cured film formed from the coating composition may have any suitable toughness. A cured film formed from the coating composition may have a toughness of up to 1 megapascal (MPa). A cured film may have a toughness of at least 0.05 MPa, such as at least 0.1 MPa, such as at least 0.15 MPa, such as at least 0.2 MPa, such as at least 0.25 MPa, or even at least 0.3 MPa.

A cured film formed from the coating compositions may have a toughness from 0.05 to 1 MPa, such as from 0.1 to 1 MPa, such as from 0.1 to 1 MPa, such as from 0.15 to 1 MPa, such as from 0.2 to 1 MPa, such as from 0.25 to 1 MPa, or even from 0.3 to 1 MPa.

A cured film formed from the coating compositions may have a toughness of ≤1 MPa, such as ≤0.9 MPa or ≤0.7 MPa, such as by wet film.

The toughness as reported herein was measured by Instron analysis. The Instron analysis of the free films (25.4mm x 5mm dimensions) was performed at ambient temperature (24°C) using the mini Instron 44 unit with a 50N load cell and rate of 5 mm/minute. Each sample was measured 3-5 times to obtain representative results. Advantageously, the use of a coating composition having toughness of up to 1 MPa, when cured to form a film, means that the coating composition has an appropriate toughness such that may substantially fully shear in the region of the score line when the beverage can is opened.

A cured film formed from the coating compositions may have a feathering of ≤5 mm, such as ≤2 mm or ≤1 mm or ≤0.4 mm or ≤0.35 mm.

As reported herein, the feathering was measured by filling a 12 ounce (340g) beverage can with 'Coca-Cola Classic' (a soda drink commercially available from Coca Cola). A CDL seamer was then used to seam the can ends onto the body of the can. The cans were then incubated at 38°C (100°F) for 18 hours. After this time, a can opener or screwdriver was used to leverage the pull tab of the can end so as to rupture the score line and open the closure. The degree of delamination (or 'feathering') of the coating in the area of the score line was then measured in millimetres (mm) and corresponds to the uncovered substrate at the edge of cut resulting from closure opening.

A "cured film" as used to measure properties of the film described herein means a film formed as follows. The coating composition was drawn down with a wire wound bar over zirconium-treated aluminum (0.0082 inch) to give a dry film weight of 6.5-7.5 milligrams/square inch (msi). The panels were then baked in a three zone coil oven (249/326/293°C) to a peak metal temperature of 240°C.

As used herein, "free film" means a film that was removed from a substrate that had been pre-treated with a lubricant that permitted the cured film to be peeled from the substrate.

The cured film used to measure properties described herein may be a dry film or a wet film. As reported herein, unless stated otherwise, "dry film" refers to a film that was formed by curing the coating composition to form a cured film and "wet film" refers to a film that was formed by curing the coating composition to form a cured film, which was then soaked in commercially available Coca Cola Classic at 38°C (100°F) for 24 hours before testing.

As used herein, unless otherwise expressly specified, all numbers such as those expressing values, ranges, amounts or percentages may be read as if prefaced by the word "about", even if the term does not expressly appear.

Singular encompasses plural and vice versa. For example, although reference is made herein to "a" first polyester material, "a" polyester, "an" acid-functional acrylic material, and the like, one or more of each of these and any other components can be used. As used herein, the term "polymer" refers to oligomers and both homopolymers and copolymers, and the prefix "poly" refers to two or more. Including, for example and like terms means including for example but not limited to.

The terms "comprising", "comprises" and "comprised of" as used herein are synonymous with "including", "includes" or "containing", "contains", and are inclusive or open-ended and do not exclude additional, non-recited members, elements or method steps. Additionally, although the present invention has been described in terms of "comprising", the coating compositions detailed herein may also be described as "consisting essentially of" or "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

For a better understanding of the invention, and to show how embodiments of the same may be carried into effect, reference will now be made, by way of example, to the following examples.

## Examples

## Polymer Examples

### Phosphatised polyester example 1

A phosphatised polyester was prepared according to the formulation in Table 1 and by the following method. All amounts are given in parts by weight (pbw) unless otherwise specified.

Components 1 and 2 were charged in a reaction vessel equipped with an agitator, a nitrogen blanket and a distillation set up and heated to 50°C. Once the temperature was reached, then components 3 to 6 were added to the vessel and slowly heated to distillation. The mixture was esterified under a nitrogen atmosphere over a period of twelve (12) hours at a temperature ranging between 180°C. and 240°C.

When the acid value of the mixture dropped to 13 mg KOH/g, the mixture was cooled to 160°C. Then, component 7 was incorporated for azeotropic distillation of water evolved as a condensate by-product. Thereafter, components 8 and 9 were added and the azeotropic distillation of water was continued until the acid value of the mixture dropped to below 20 mg KOH/g. The resulting phosphatised polyester was then dissolved in components 10 and 11. The resultant phosphatised polyester product was 50 wt% solids, had a number average molecular weight (Mn) of 4,500 Da, an acid number of 20 mg KOH/g and a hydroxyl value of 45 mg KOH/g.

**Table 1 - Formulation of phosphatised polyester example 1**

| | Component | Amount / pbw |
|---|---|---|
| 1 | 2-methyl-1,3-propanediol | 19.90 |
| 2 | Trimethylol propane | 3.00 |
| 3 | Isophthalic acid | 14.35 |
| 4 | Dibutyl tin oxide | 0.06 |
| 5 | Maleic anhydride | 8.35 |
| 6 | Phthalic anhydride | 7.30 |
| 7 | Aromatic 100 [1] | 7.79 |
| 8 | Phosphoric acid (85% solvents) | 1.11 |
| 9 | Deionised water | 0.08 |
| 10 | 2-butoxyethanol | 4.26 |
| 11 | Monobutyl ether of diethylene glycol | 33.80 |
| | Total | 100 |

[1] Aromatic solvent available from Exxon Mobile

## Acrylic Examples

### Acrylic examples 1 to 10

Acid-functional acrylic examples 1 to 10 were prepared using the monomers and solvents according to Table 2 and by the following general method. All amounts are given in weight percent (wt%) unless otherwise specified.

For the avoidance of doubt, MAA is methacrylic acid, AA is acrylic acid, MA is methacrylate, MMA is methyl methacrylate, EMA is ethyl methacrylate, BA is butylacrylate, BMA is butyl methacrylate, HEMA is (hydroxyethyl)methacrylate and GMA is glycidyl methacrylate.

374 g Dowanol PM (available from Dow) and 150 g isopropanol were charged to a reaction vessel equipped with an agitator, a nitrogen blanket and a condenser set up and heated to reflux at 100°C. Then, the monomers as provided in Table 2, 12.27 g t-butyl peroctoate and 17.76 g Dowanol PM were charged to the reaction vessel over a time period of 180 minutes with stirring. After this time, 17.05 g Dowanol PM was added and the reaction mixture was held for 15 minutes at 100°C. Then, 50 vol% of a mixture of 2.18 g t-butyl peroctoate and 22.93 g Dowanol PM was added and the reaction mixture was held for a further 60 minutes. After this time, the remaining 50 vol% of the t-butyl peroctoate/Dowanol PM mixture was added along with a 13.95 g Dowanol PM rinse and the reaction mixture was once again held for 60 minutes. Then, the heat was removed, 164.01 g Dowanol PM was added to the reaction vessel and the reaction mixture was allowed to cool to 35°C.

The resultant acrylic resins were then removed from the reaction vessel by pouring into a glass jar. The acid number of the resultant acrylic resins is provided in Table 2.

### Comparative acrylic example 1 and 2

Comparative acrylic example 1, which was an acrylic material having no acid-functionality, was prepared using the monomers according to Table 2 and by the method described above for acid-functional acrylic examples 1 to 10. All amounts are given in weight percent (wt%) unless otherwise specified.

**Table 2 - Composition of acrylic examples 1 to 10 and comparative acrylic examples 1 and 2**

| Acrylic example | MAA | AA | MA | MMA | EMA | BA | BMA | HEMA | GMA | Solvent Composition | Acid Number (mg KOH/g) |
|---|---|---|---|---|---|---|---|---|---|---|---|
| 1 | 32.72% | - | 33.64% | - | 33.64% | - | - | - | - | Butanol | 208 |
| 2 | 32.72% | - | 59.27% | - | 8.01% | - | - | - | - | Cyclohexanone PM Acetate Methyl Ethyl Ketone | 208 |
| 3 | 16.36% | 13.70% | 69.94% | - | - | - | - | - | - | Dowanol PM Isopropanol | 208 |
| 4 | 9.03% | 21.03% | 36.61 % | - | - | - | 33.33% | - | - | | 219 |
| 5 | 16.36% | 13.70% | 69.94% | - | - | - | - | - | - | | 210 |
| 6 | - | 5.00% | 29.35% | 25.65% | - | - | 33.00% | 7.00% | - | | 38 |
| 7 | 9.03% | 21.03% | 29.94% | - | - | - | 33.00% | 7.00% | - | | 219 |
| 8 | 34.15% | - | 18.59% | 13.93% | - | - | 33.33% | - | - | | 219 |
| 9 | - | 28.59% | 21.59% | 19.78% | - | 30.05% | - | - | - | | 219 |
| 10 | 9.03% | 21.03% | 36.61% | - | - | - | 31.33% | - | 2.00% | | 219 |
| Comparative 1 | - | - | 14.06% | 42.39% | 43.55% | - | - | - | - | Cyclohexanone PM Acetate Methyl Ethyl Ketone | 0 |

## Coating Examples

### Comparative coating example 1

Comparative coating example is PPG8500-802, a water-based epoxy commercially available from PPG.

### Comparative coating example 2

Comparative coating example 2 was prepared based on a binder comprising a polyester polyol having an acid number of 5 mg KOH/g and a glass transition temperature (Tg) of 23°C, the phosphatised polyester of phosphatised polyester example 1 and a benzoguanamine-formaldehyde crosslinking material at a solid ratio of 20:1:6. The ingredients were added to a container and mixed with mild agitation to form a clear varnish.

### Coating Examples 1 to 12

Coating examples 1 to 14 were prepared according to the formulations in Table 3. All amounts are given in parts by weight (pbw) based on the solid content of the components unless otherwise specified.

### Coating Example 13

Coating example 13 was prepared by mixing comparative coating example 2, acrylic example 4, Maprenal BF 892/68B (a benzoguanamine crosslinker material available from Ineos) and Phenodur VPR-1785 (a phenolic crosslinker material available from Allnex). The components were mixed at a solid ratio of comparative coating example 2 to acrylic example 4 to Maprenal BF 892/68B to Phenodur VPR-1785 of 70:10:15:5.

### Coating example14

Coating example 14 was prepared by first mixing acrylic example 4 with Maprenal BF 892/68B (a benzoguanamine crosslinker material available from Ineos) at a solid ratio of acrylic to crosslinker material of 1:3 to form a preblend. The acrylic/crosslinker material pre-blend was subsequently mixed with comparative coating example 2 at a solid ratio of comparative coating example 2 to acrylic/crosslinker material mixture of 2:1 (resulting in a solid ratio of coating composition of comparative coating example 2 to acrylic to crosslinker material of 67:8:25).

**Table 3 - Composition of coating examples 1 to 12**

| | Coating Example | | | | | | | | | | | |
|---|---|---|---|---|---|---|---|---|---|---|---|---|
| **Components** | **1** | **2** | **3** | **4** | **5** | **6** | **7** | **8** | **9** | **10** | **11** | **12** |
| Comparative coating example 2 | 90 | 85 | 92.5 | 85 | 85 | 85 | 85 | 85 | 85 | 85 | 85 | 85 |
| Acrylic example 1 | 10 | 10 | 5 | - | - | - | - | - | - | - | - | - |
| Acrylic example 2 | - | - | - | 10 | | - | - | - | - | - | - | - |
| Acrylic example 3 | - | - | - | - | 10 | - | - | - | - | - | - | - |
| Acrylic example 4 | - | - | - | - | - | 10 | - | - | - | - | - | - |
| Acrylic example 5 | - | - | - | - | - | - | 10 | - | - | - | - | - |
| Acrylic example 6 | - | - | - | - | - | - | - | 10 | - | - | - | - |
| Acrylic example 7 | - | - | - | - | - | - | - | - | 10 | - | - | - |
| Acrylic example 8 | - | - | - | - | - | - | - | - | - | 10 | - | - |
| Acrylic example 9 | - | - | - | - | - | - | - | - | - | - | 10 | - |
| Acrylic example 10 | - | - | - | - | - | - | - | - | - | - | - | 10 |
| Phenodur VPR-1785 [1] | - | 5 | 2.5 | 5 | 5 | 5 | 5 | 5 | 5 | 5 | 5 | 5 |
| Total (based on solids) | 100 | 100 | 100 | 100 | 100 | 100 | 100 | 100 | 100 | 100 | 100 | 100 |
| [1] crosslinker available from Allnex | | | | | | | | | | | | |

**Comparative coating examples 3 to 7**

Coating examples 3 to 7 were prepared according to the formulations in Table 4. All amounts are given in parts by weight (pbw) based on the solid content of the components unless otherwise specified.

**Table** 4 - **Composition of comparative coating examples 3 to 7**

| | Comparative Coating Example | | | | |
|---|---|---|---|---|---|
| **Components** | **3** | **4** | **5** | **6** | **7** |
| Comparative coating example 2 | 95 | 85 | 85 | 90 | 98.5 |
| Acrylic example 1 | - | - | - | - | 1 |
| Comparative acrylic example 1 | - | 10 | 10 | 10 | - |
| Phenodur VPR-1785 [1] | 5 | 5 | 5 | - | 0.5 |
| Total (based on solids) | 100 | 100 | 100 | 100 | 100 |
| [1] crosslinker available from Allnex | | | | | |

The properties of the coatings where then tested according to the following methods. The results are shown in Tables 5 and 6.

**Test Methods**

**Test panel preparation:** The coatings were drawn down with a wire wound bar over zirconium-treated aluminum (0.0082 inch) to give a dry film weight of 6.5-7.5 milligrams/square inch (msi). The panels were then baked in a three zone coil oven (249/326/293°C) to a peak metal temperature of 240°C. The coated panels were stamped and scored into easy open ends (EOEs) of the CDL-type.

**Feathering:** A feathering test was used to determine the degree of lamination of the coatings after the score line of the EOE is ruptured (i.e. after the closure is opened). A 12 ounce (340g) beverage can was filled with 'Coca-Cola Classic' (a soda drink commercially available from Coca Cola). A CDL seamer was then used to seam the can ends onto the body of the can. The cans were then incubated at 38°C (100°F) for 18 hours. After this time, a can opener or screwdriver was used to leverage the pull tab of the can end so as to rupture the score line and open the closure. The degree of delamination (or 'feathering') of the coating in the area of the score line was then measured in millimetres (mm) and corresponds to the uncovered substrate at the edge of cut resulting from closure opening.

**Venting/Eversion testing:** Eversion testing was used to determine the degree of venting. The contents of a 12 ounce (340g) can of soda which had been cooled to 1.5°C overnight was gently transferred into an empty 12 ounce (340g) beverage can. A CDL seamer was then used to seam the can ends onto the body of the can. The cans were placed upside down (i.e. with the can end being tested being at the bottom) in an incubator and incubated at 38°C for 18 hours. After this time, the cans were removed from the incubator and transferred to a fume hood. A can opener or screwdriver was then used to gently leverage the pull tab of the can end. If a metal crack sound was heard (rupture of the score line) with the pressure release 'hiss', there was no eversion and sufficient venting has occurred. This was considered to be a pass. If a metal crack sound was heard (rupture of the score line) but the pressure was not released, there was eversion and sufficient venting had not occurred. This was considered to be a failure. The test was repeated a number of times and the number of failures was recorded. For example, 2 failures out of 16 test repeats would be recorded as 2/16.

**Young's Modulus:** The Young's modulus was measured by Instron analysis. The Instron analysis of the free films (25.4mm x 5mm dimensions) was performed at ambient temperature (24°C) using the mini Instron 44 unit with a 50N load cell and rate of 5 mm/minute. Each sample was measured 3-5 times to obtain representative results.

**Elongation:** The elongation as reported herein was measured with an Instron Tester according to ASTM D638-72, with the exception that a rectangular sample is tested rather than one having dog-bone geometry. The Instron analysis of the free films (25.4mm x 5mm dimensions) was performed using the mini Instron 44 unit with a 50N load cell and rate of 5 mm/minute. Each sample was measured 3-5 times to obtain representative results.

**Toughness:** The toughness of the coatings was measured by tensile test using the mini Instron 44 unit with a 50N load cell and rate of 5 mm/minute. Each sample was measured 3-5 times to obtain representative results.

**Table 5 - Test results**

| Coating | Acid number of acid-functional acrylic, if present (mg KOH/g) | Feathering (mm) | Venting |
|---|---|---|---|
| Comparative example 2 | - | 5.52 | 27/30 |
| Comparative example 3 | - | 4.53 | - |
| Comparative example 4 | 0 | 2.68 | - |
| Comparative example 5 | 0 | 3.09 | - |
| Comparative example 6 | 0 | 3.16 | - |
| Comparative example 7 | 208 | 1.95 | - |
| Example 1 | 208 | 0 | 0/24 |
| Example 2 | 208 | 0.1 | - |
| Example 3 | 208 | 0.89 | - |
| Example 4 | 208 | 0 | - |
| Example 5 | 208 | 0 | - |
| Example 6 | 219 | 0 | 0/60 |
| Example 7 | 210 | 0 | - |
| Example 8 | 38 | 0 | - |
| Example 9 | 219 | 0 | - |
| Example 10 | 219 | 0 | - |
| Example 11 | 219 | 0 | - |
| Example 12 | 219 | 0 | - |
| Example 13 | 219 | 0 | 0/60 |
| Example 14 | 219 | 0.2 | 0/18 |

**Table 6 – Test Results**

| Coating | Young's Modulus (MPa) | Elongation (%) | Toughness (MPa) |
|---|---|---|---|
| **Dry film** | | | |
| Comparative example 1 | 2472 ± 168 | 4.1 ± 1.2 | 1.7 ± 0.8 |
| Comparative example 2 | 1538 ± 83 | 23 ± 14 | 4.8 ± 3.1 |
| Coating example 13 | 5327 ± 882.6 | 1.47 ± 0.90 | 0.31 ± 0.21 |
| Coating example 14 | 6640 ± 477.6 | 1.32 ±0.30 | 0.38 ± 0.09 |
| **Wet film** | | | |
| Comparative example 1 | - | <10 | - |
| Comparative example 2 | 1471 ±168 | 89 ± 14 | 18 ± 3 |
| Coating example 13 | 6503 ± 1244 | 1.12 ± 0.49 | 0.30 ± 0.20 |
| Coating example 14 | 7342 ± 913.6 | 2.80 ± 1.54 | 0.91 ± 0.48 |

The examples show that the coating compositions according to the present invention provide excellent venting. Furthermore, the coating compositions according to the present invention provide excellent venting in combination with good to excellent coating integrity.

Whereas particular examples of this invention have been described above for purposes of illustration, it will be evident to those skilled in the art that numerous variations of the details of the present invention may be made without departing from the invention as defined in the appended claims.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

**1.** A coating composition, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

wherein the coating composition comprises at least 5 wt% of the acid-functional acrylic material based on the total solid weight of the coating composition.

**2.** A coating composition, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material,

wherein a coating formed from the coating composition has a wet film elongation of ≤20%, as measured in the specification, with:

(i) a wet film Young's modulus of ≥3 GPa, as measured in the specification,
(ii) a wet film toughness of ≤1 MPa, as measured in the specification; and/or
(iii) a feathering of ≤5 mm, as measured in the specification.

**3.** A coating composition, the coating composition comprising:

(a) a first polyester material;
(b) a second polyester material different from the first polyester material, wherein the second polyester material comprises the reaction product of a reaction mixture comprising:

(i) a polyacid;
(ii) a polyol; and
(iii) a phosphorous acid; and

(c) an acid-functional acrylic material having an acid number of at least 100 mg KOH/g.

4. A coating composition according to claim 1, 2 or 3 wherein a cured film formed from the coating composition has an elongation, as measured in the specification, of up to 5%.

5. A coating composition according to any preceding claim, wherein the coating composition comprises 5 to 10 wt% of the acid-functional acrylic material based on the total solid weight of the coating composition.

6. A coating composition according to any of claims 1, 2, 4 or 5, wherein the acid-functional acrylic material has an acid number of at least 100 mg KOH/g.

7. A coating composition according to any preceding claim, wherein the acid-functional acrylic material is completely free of oxirane groups.

8. A coating composition according to any preceding claim, wherein the acid-functional acrylic material is formed from methacrylic acid, acrylic acid or combinations thereof.

9. A coating composition according to any preceding claim, wherein the first polyester material has a glass transition temperature (Tg), as measured in the specification, of up to 50°C.

10. A coating composition according to any preceding claim, wherein the second polyester material comprises the reaction product of a reaction mixture comprising:

(I) a precursor polyester resin having an Mn of 2,000 to 10,000, as measured in the specification, a hydroxyl number of 20 to 75 and an acid value of 15 to 25, wherein the precursor polyester resin comprises the polycondensate of a reaction mixture comprising:

(i) a polyacid, and
(ii) a polyol, and

(II) a phosphorous acid.

11. A coating composition according to any preceding claim, wherein the second polyester is present in the coating composition in an amount of up to 10 wt% based on the total solid weight of the coating composition.

12. A coating composition according to claim 1, 2 or 3 wherein a cured film formed from the coating composition has a Young's modulus of at least 3 GPa and/or a toughness of up to 1 megapascal (MPa), as measured in the specification.

13. A food and/or beverage packaging coated on at least of portion thereof with a coating, the coating being derived from a coating composition, the coating composition comprising a coating composition according to claim 1; or a coating composition according to claim 2; or a coating composition according to claim 3.

14. Use of a coating composition for the reduction or prevention of insufficient venting of a beverage can, the beverage can comprising a can body and a can end having a score line on said can end, wherein the coating composition comprises a coating composition according to claim 1; or a coating composition according to claim 2; or a coating composition according to claim 3;

wherein the coating composition is applied to at least the internal surface of the can end over at least a portion of the score line;
and wherein the can, when filled with a carbonated beverage and sealed, exhibits sufficient venting upon rupture of the score line.

15. A method of coating a can comprising a can body and a can end having a score line on said can end, wherein the method comprises applying a coating composition to at least a portion of an internal surface of the can end over at least a portion of the score line, the coating composition comprising a coating composition according to claim 1; or a coating composition according to claim 2; or a coating composition according to claim 3;
wherein the can, when filled with a carbonated beverage and sealed, exhibits sufficient venting upon rupture of the score line.

**Patentansprüche**

1. Beschichtungszusammensetzung, wobei die Beschichtungszusammensetzung umfasst:

   (a) ein erstes Polyestermaterial;
   (b) ein zweites Polyestermaterial, das sich von dem ersten Polyestermaterial unterscheidet, wobei das zweite Polyestermaterial das Reaktionsprodukt einer Reaktionsmischung umfasst, welche umfasst:

      (i) eine Polysäure;
      (ii) ein Polyol und
      (iii) eine Phosphorigsäure; und

   (c) ein säurefunktionelles Acrylmaterial,

   wobei die Beschichtungszusammensetzung mindestens 5 Gew.% des säurefunktionellen Acrylmaterials umfasst, bezogen auf das gesamte Feststoffgewicht der Beschichtungszusammensetzung.

2. Beschichtungszusammensetzung, wobei die Beschichtungszusammensetzung umfasst:

   (a) ein erstes Polyestermaterial;
   (b) ein zweites Polyestermaterial, das sich von dem ersten Polyestermaterial unterscheidet, wobei das zweite Polyestermaterial das Reaktionsprodukt einer Reaktionsmischung umfasst, welche umfasst:

      (i) eine Polysäure;
      (ii) ein Polyol und
      (iii) eine Phosphorigsäure; und

   (c) ein säurefunktionelles Acrylmaterial,

   wobei eine aus der Beschichtungszusammensetzung gebildete Beschichtung eine Längung des Nassfilms $\leq$ 20 % hat, gemessen gemäß den technischen Angaben, mit

   (i) einem Youngschen Modul des Nassfilms $\geq$ 3 GPa, gemessen gemäß den technischen Angaben,
   (ii) einer Zähigkeit des Nassfilms $\leq$ 1 MPa, gemessen gemäß den technischen Angaben; und/oder
   (iii) einem Auslaufen $\leq$ 5 mm, gemessen gemäß den technischen Angaben.

3. Beschichtungszusammensetzung, wobei die Beschichtungszusammensetzung umfasst:

   (a) ein erstes Polyestermaterial;
   (b) ein zweites Polyestermaterial, das sich von dem ersten Polyestermaterial unterscheidet, wobei das zweite Polyestermaterial das Reaktionsprodukt einer Reaktionsmischung umfasst, welche umfasst:

      (i) eine Polysäure;
      (ii) ein Polyol und
      (iii) eine Phosphorigsäure; und

   (c) ein säurefunktionelles Acrylmaterial mit einer Säurezahl von mindestens 100 mg KOH/g.

4. Beschichtungszusammensetzung nach Anspruch 1, 2 oder 3, wobei ein aus der Beschichtungszusammensetzung gebildeter gehärteter Film eine Längung, gemessen gemäß den technischen Angaben, von bis zu 5 % hat.

5. Beschichtungszusammensetzung nach einem der vorhergehenden Ansprüche, wobei die Beschichtungszusammensetzung 5 bis 10 Gew.% des säurefunktionellen Acrylmaterials umfasst, bezogen auf das gesamte Feststoffgewicht der Beschichtungszusammensetzung.

6. Beschichtungszusammensetzung nach einem der Ansprüche 1, 2, 4 oder 5, wobei das säurefunktionelle Acrylmaterial eine Säurezahl von mindestens 100 mg KOH/g hat.

7. Beschichtungszusammensetzung nach einem der vorhergehenden Ansprüche, wobei das säurefunktionelle Acrylmaterial vollständig frei von Oxirangruppen ist.

8. Beschichtungszusammensetzung nach einem der vorhergehenden Ansprüche, wobei das säurefunktionelle Acrylmaterial aus Methacrylsäure, Acrylsäure oder Kombinationen davon gebildet ist.

9. Beschichtungszusammensetzung nach einem der vorhergehenden Ansprüche, wobei das erste Polyestermaterial eine Glasübergangstemperatur (Tg), gemessen gemäß den technischen Angaben, von bis zu 50 °C hat.

10. Beschichtungszusammensetzung nach einem der vorhergehenden Ansprüche, wobei das zweite Polyestermaterial das Reaktionsprodukt einer Reaktionsmischung umfasst, welche umfasst:

(I) ein Vorläuferpolyesterharz mit einer Mn von 2000 bis 10.000, gemessen gemäß den technischen Angaben, einer Hydroxylzahl von 20 bis 75 und einem Säurewert von 15 bis 25, wobei das Vorläuferpolyesterharz das Polykondensat einer Reaktionsmischung umfasst, welche umfasst:

(i) eine Polysäure, und
(ii) ein Polyol und

(II) eine Phosphorigsäure.

11. Beschichtungszusammensetzung nach einem der vorhergehenden Ansprüche, wobei der zweite Polyester in der Beschichtungszusammensetzung in einer Menge bis zu 10 Gew.% vorhanden ist, bezogen auf das gesamte Feststoffgewicht der Beschichtungszusammensetzung.

12. Beschichtungszusammensetzung nach Anspruch 1, 2 oder 3, wobei ein aus der Beschichtungszusammensetzung gebildeter gehärteter Film einen Youngschen Modul von mindestens 3 GPa und/oder eine Zähigkeit von bis zu 1 Megapascal (MPa) hat, gemessen gemäß den technischen Angaben.

13. Nahrungsmittel- und/oder Getränkeverpackung, die auf mindestens einem Anteil davon mit einer Beschichtung beschichtet ist, wobei die Beschichtung von einer Beschichtungszusammensetzung abgeleitet ist, wobei die Beschichtungszusammensetzung eine Beschichtungszusammensetzung nach Anspruch 1; oder eine Beschichtungszusammensetzung nach Anspruch 2; oder eine Beschichtungszusammensetzung nach Anspruch 3 umfasst.

14. Verwendung einer Beschichtungszusammensetzung zur Reduktion oder Verhinderung von unzureichender Entgasung einer Getränkedose, wobei die Getränkedose einen Dosenkörper und ein Dosenende mit einer Kerblinie auf dem Dosenende umfasst, wobei die Beschichtungszusammensetzung eine Beschichtungszusammensetzung nach Anspruch 1; oder eine Beschichtungszusammensetzung nach Anspruch 2; oder eine Beschichtungszusammensetzung nach Anspruch 3 umfasst;

wobei die Beschichtungszusammensetzung auf mindestens die Innenoberfläche des Dosenendes über mindestens einem Anteil der Kerblinie aufgebracht wird;
und wobei die Dose, wenn sie mit einem kohlensäurehaltigen Getränk gefüllt und versiegelt wird, ausreichend Entgasung beim Aufreißen der Kerblinie aufweist.

15. Verfahren zum Beschichten einer Dose, umfassend einen Dosenkörper und ein Dosenende mit einer Kerblinie auf dem Dosenende, wobei das Verfahren Auftragen einer Beschichtungszusammensetzung auf mindestens einen Anteil einer Innenoberfläche des Dosenendes über mindestens einem Anteil der Kerblinie umfasst, wobei die Beschichtungszusammensetzung eine Beschichtungszusammensetzung nach Anspruch 1; oder eine Beschichtungszusammensetzung nach Anspruch 2; oder eine Beschichtungszusammensetzung nach Anspruch 3 umfasst;
wobei die Dose, wenn sie mit einem kohlensäurehaltigen Getränk gefüllt und versiegelt wird, ausreichend Entgasung beim Aufreißen der Kerblinie aufweist.

## Revendications

1. Composition de revêtement, la composition de revêtement comprenant :

(a) un premier matériau de polyester ;
(b) un deuxième matériau de polyester différent du premier matériau de polyester, le deuxième matériau de polyester comprenant le produit de réaction d'un mélange réactionnel comprenant :

(i) un polyacide ;
(ii) un polyol ; et
(iii) un acide phosphoreux ; et

(c) un matériau acrylique fonctionnalisé par acide,

la composition de revêtement comprenant au moins 5 % en poids du matériau acrylique fonctionnalisé par acide sur la base du poids total de solides de la composition de revêtement.

**2.** Composition de revêtement, la composition de revêtement comprenant :

(a) un premier matériau de polyester ;
(b) un deuxième matériau de polyester différent du premier matériau de polyester, le deuxième matériau de polyester comprenant le produit de réaction d'un mélange réactionnel comprenant :

(i) un polyacide ;
(ii) un polyol ; et
(iii) un acide phosphoreux ; et

(c) un matériau acrylique fonctionnalisé par acide,

un revêtement formé à partir de la composition de revêtement ayant une élongation de film humide de ≤ 20 %, telle que mesurée dans la description, avec :

(i) un module de Young de film humide de ≥ 3 GPa, tel que mesuré dans la description,
(ii) une ténacité de film humide de ≤ 1 MPa, telle que mesurée dans la description ; et/ou
(iii) une propagation de ≤ 5 mm, telle que mesurée dans la description.

**3.** Composition de revêtement, la composition de revêtement comprenant :

(a) un premier matériau de polyester ;
(b) un deuxième matériau de polyester différent du premier matériau de polyester, le deuxième matériau de polyester comprenant le produit de réaction d'un mélange réactionnel comprenant :

(i) un polyacide ;
(ii) un polyol ; et
(iii) un acide phosphoreux ; et

(c) un matériau acrylique fonctionnalisé par acide ayant un indice d'acide d'au moins 100 mg de KOH/g.

**4.** Composition de revêtement selon la revendication 1, 2 ou 3, un film durci formé à partir de la composition de revêtement possédant une élongation, telle que mesurée dans la description, allant jusqu'à 5 %.

**5.** Composition de revêtement selon une quelconque revendication précédente, la composition de revêtement comprenant 5 à 10 % en poids du matériau acrylique fonctionnalisé par acide sur la base du poids total de solides de la composition de revêtement.

**6.** Composition de revêtement selon l'une quelconque des revendications 1, 2, 4 ou 5, le matériau acrylique fonctionnalisé par acide ayant un indice d'acide d'au moins 100 mg de KOH/g.

**7.** Composition de revêtement selon une quelconque revendication précédente, le matériau acrylique fonctionnalisé par acide étant complètement exempt de groupes oxirane.

**8.** Composition de revêtement selon une quelconque revendication précédente, le matériau acrylique fonctionnalisé

par acide étant formé à partir d'acide méthacrylique, d'acide acrylique ou de combinaisons correspondantes.

**9.** Composition de revêtement selon une quelconque revendication précédente, le premier matériau de polyester ayant une température de transition vitreuse (Tg), telle que mesurée dans la description, allant jusqu'à 50 °C.

**10.** Composition de revêtement selon une quelconque revendication précédente, le deuxième matériau de polyester comprenant le produit de réaction d'un mélange réactionnel comprenant :

(I) une résine de polyester précurseur ayant un Mn de 2 000 à 10 000, tel que mesuré dans la description, un indice d'hydroxyle de 20 à 75 et un indice d'acide de 15 à 25, la résine de polyester précurseur comprenant le polycondensat d'un mélange réactionnel comprenant :

(i) un polyacide, et
(ii) un polyol, et

(II) un acide phosphoreux.

**11.** Composition de revêtement selon une quelconque revendication précédente, le deuxième polyester étant présent dans la composition de revêtement en une quantité allant jusqu'à 10 % en poids sur la base du poids total de solides de la composition de revêtement.

**12.** Composition de revêtement selon la revendication 1, 2 ou 3, un film durci formé à partir de la composition de revêtement ayant un module de Young d'au moins 3 GPa et/ou une ténacité allant jusqu'à 1 mégapascal (MPa), tels que mesurés dans la description.

**13.** Emballage de produit alimentaire et/ou de boisson revêtu sur au moins une partie de celui-ci par un revêtement, le revêtement étant issu d'une composition de revêtement, la composition de revêtement comprenant une composition de revêtement selon la revendication 1 ; ou une composition de revêtement selon la revendication 2 ; ou une composition de revêtement selon la revendication 3.

**14.** Utilisation d'une composition de revêtement pour la réduction ou la prévention d'une ventilation insuffisante d'une canette de boisson, la canette de boisson comprenant un corps de canette et une extrémité de canette ayant une ligne de rupture sur ladite extrémité de canette, la composition de revêtement comprenant une composition de revêtement selon la revendication 1 ; ou une composition de revêtement selon la revendication 2 ; ou une composition de revêtement selon la revendication 3 ; la composition de revêtement étant appliquée sur au moins la surface interne de l'extrémité de canette au-dessus d'au moins une partie de la ligne de rupture ;
et la canette, lorsqu'elle est remplie avec une boisson gazeuse et scellée, présentant une ventilation suffisante lors d'une rupture de la ligne de rupture.

**15.** Procédé de revêtement d'une canette comprenant un corps de canette et une extrémité de canette ayant une ligne de rupture sur ladite extrémité de canette, le procédé comprenant une application d'une composition de revêtement sur au moins une partie d'une surface interne de l'extrémité de canette au-dessus d'au moins une partie de la ligne de rupture, la composition de revêtement comprenant une composition de revêtement selon la revendication 1 ; ou une composition de revêtement selon la revendication 2 ; ou une composition de revêtement selon la revendication 3 ; la canette, lorsqu'elle est remplie avec une boisson gazeuse et scellée, présentant une ventilation suffisante lors d'une rupture de la ligne de rupture.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2012162301 A1
- WO 2014123955 A
- WO 2017122171 A
- US 8614286 B

### Non-patent literature cited in the description

- The Chemistry and Application of Phenolic Resins or Phenoplast. John Wiley and Sons/Cita Technology Limited, 1997, vol. V
- The Chemistry and Applications of Amino Crosslinking agents or Aminoplast. John Wiley & Sons/Cita Technology Limited, 1998, vol. V, 21